# EUROPEAN PATENT SPECIFICATION

(11) **EP 2 356 797 B1**
(45) Date of publication and mention of the grant of the patent: **04.03.2015**
(21) Application number: 10778016.5
(22) Date of filing: 17.05.2010
(51) Int. Cl.: H04L 29/06, H04N 7/173, H04N 21/61, H04N 21/643, H04N 21/443, H04N 21/6402

(54) **METHOD FOR IMPLEMENTING IMS FUNCTIONALITY IN A SET TOP BOX**
VERFAHREN ZUR UMSETZUNG EINER IMS-FUNKTIONALITÄT IN EINER SET-TOP-BOX
PROCÉDÉ D'IMPLÉMENTATION D'UNE FONCTIONNALITÉ IMS DANS UN BOÎTIER DÉCODEUR

(30) Priority: 18.05.2009 US 179300 P
(43) Date of publication of application: 17.08.2011
(73) Proprietor: TELEFONAKTIEBOLAGET LM ERICSSON (PUBL), 164 83 Stockholm (SE)
(72) Inventor: CEDERVALL, Mats, S-871 60 Härnösand (SE); FONDBERG, Niklas, S-122 62 Enskede (SE); LINDQUIST, Jan, Erik, S-125 35 Älvsjö (SE)
(74) Representative: Barrett, Peter Andrew John
(86) International application number: PCT/SE2010/050533
(87) International publication number: WO 2010/134876

(56) References cited:
- EP-A1- 2 000 917
- WO-A1-2007/071282
- WO-A1-2007/071461
- WO-A1-2007/140834
- US-A1- 2009 017 796
- CHING-SHINE HWANG ET AL: "Developing a Web Based Digital Life System", INNOVATIVE COMPUTING INFORMATION AND CONTROL, 2008. ICICIC '08. 3RD INTERNATIONAL CONFERENCE ON, IEEE, PISCATAWAY, NJ, USA, 18 June 2008 (2008-06-18), page 183, XP031341495, ISBN: 978-0-7695-3161-8
- 'OIPF Functional Architecture, V1.2' OPEN IPTV FORUM vol. 1.2, 08 December 2008, pages 31 - 54, XP030001534

## Description

### TECHNICAL FIELD

The present invention generally related to IPTV and IMS, and in particular to providing such IPTV and IMS functionality and capability to a set top box.

### BACKGROUND

Internet Protocol (IP) multimedia services provide a dynamic combination of voice, video, messaging, data, etc. within the same session. Having different available applications and media types makes it possible to increase the number of services offered to the end users, and thus to enrich the inter-personal communication experience. This enables personalized, rich multimedia communication services.

IP Television (IPTV) is an emerging system where digital television and multimedia services are delivered to set top boxes present in a home environment using IP over a network infrastructure. Today, IPTV is most often associated with Video on Demand (VoD) and live TV services. However, IPTV can also provide Internet services, such as web access and Voice over IP (VoIP). Another feature of IPTV is the opportunity for integration and convergence with other multimedia services. This opportunity is affected mainly by the IP Multimedia Subsystem (IMS), providing an architectural framework for delivering IP multimedia serves in the IPTV environment. Such IMS-based services that can be used with the set top boxes include chats, presence services, contact list services and different messaging services, such as instant messaging, allowing IPTV users to communicate with each other.

IMS provides key features to enrich the end-user person-to-person communication experience through the use of standardized IMS service enablers, which facilitate new rich person-to-person, i.e. client-to-client, communication services as well as person-to-content, i.e. client-to-server, services over IP-based networks.

Generally an IP-based network providing IPTV services to end users can be in the form of a managed network or so-called open Internet or unmanaged network. The latter provides IPTV services through the Internet, without quality of service guarantees. Examples of the former are radio-based communication networks managed by a network operator and which can provide IPTV services at guaranteed quality of service levels.

User terminals, so-called set top boxes (STBs), present in the home environment for affecting the IPTV services are generally of different types depending on whether used in a managed network or the open internet. For instance, a set top box for use in a managed network may be manufactured to comprise embedded or native functionality, i.e. computer program code, for enabling IMS services. The set top box consequently comprises native logics locally installed and/or hardware elements that are needed for setting up and manage an IMS session, including capability of using the Home Network Interface - IMS Gateway Interface (HNI-IGI) between the native or embedded IMS application and a remote IMS Gateway (IG). The set top box also has an implemented IMS stack code defining how such IMS-related communication is performed.

However, set top boxes, TVs and other IPTV terminals are quite cost sensitive, in terms of being quite expensive for buying users, when it comes to new functionality. This means that in order to be able to implement IMS services, the user has to replace its existing set top box with one that is pre-configured to include the necessary logics and applications to enable IMS services. Such a solution is, however, both costly and inflexible for the user.

WO 2007/140834 describes a communication system (SYS), a gateway apparatus (HiGA) and a method for allowing services of a first type provided by a communication server (IMS-S) to be provided to terminal devices (T1, T2, ... Tn ... TN) of a home network (CPN) independent of the fact whether the terminal devices are of a first type or a second type (IMS-based or non-IMS-based). The gateway apparatus (HiGA) comprises one or more service-specific mapping applications (AS) for adapting the control plane (SIP) used between the second type terminal devices (T2) to the control plane (HTTP) used between the gateway apparatus (HiGA) and the communication sever (IMS-S).

EP 2000917 describes a configuration in which a device in a home network receives content from a server outside the home network and plays the content. A home IMS gateway maps an external server outside the home network as a virtual home network device, and executes a process of receiving a content providing service provided by the external server by using mapping information. Furthermore, switched reception of multicast distribution content provided by the external server and unicast distribution content is executed.

"Developing a Web Based Digital Life System" by HWANG et al, (published in Innovative Computing Information and Control, 18 June 2008 page 183, ISBN: 978-0-7695-3161-8) describes a digital life system which integrates separately developed Internet appliance applications. A lot of web enabled Internet appliances are in use, and users can control these appliances by using a web browser. This document describes how to implement these appliances separately; services of these appliances are integrated seamlessly as a whole on a web platform. Thus users can access the appliance through Internet at any place and any time.

### SUMMARY

There is, thus, a need for enabling usage of managed IPTV and IMS services in set top boxes that are not manufactured with implemented native or embedded IMS functionality.

It is a general object to enable IMS services to set top boxes.

It is a particular object to provide IMS functionality at set top boxes.

The invention is set out in the appended claims.

Briefly, the present invention discloses the provision of IMS functionality and application in a browser environment in a set top box and consequently does not need to have any native, i.e. pre-installed and configured, support for IMS at the set top box. A script-based IMS application run in a web browser in a declarative application environment is designed to take on the role of an IMS application in the set top box and perform the necessary data processing and IPTV session signaling with external units.

According to a first aspect a set top box is provided. The set top box comprises a communication interface configured to enable communication with an IMS gateway, a web browser configured to generate a web page displayable on a display screen of or connected to said set top box, an embedded OITF system connected to said communication interface, and a script-based IMS application configured to be run by said web browser. The set top box further comprises a signal generator configured to generate IPTV session signals destined to said IMS gateway to set-up and control an IPTV session, and an address provider configured to provide, to said OITF system, address information associated with media data available from a media server in a global network connected to said home network and received from said IMS gateway. Said OITF system is configured to generate, based on said address information from said script-based IMS application, a media request for said media data within said IPTV session and destined to said media server. Further said script-based IMS application is configured to receive, from said IMS gateway, a service provider selection page comprising, for each available service provider present in said global network, a provider identifier associated with the service provider but pointing towards said IMS gateway and transmit, to said IMS gateway, a service provider command comprising a provider identifier of a selected service provider and generated based on a user input, wherein the user input is configured to trigger the script-based IMS application to generate a service provider command comprising the provider identifier of the selected service provider.

According to a second aspect a method of setting up an IPTV session is provided. The method comprises running a script-based IMS application in a web browser implemented in a set top box; said script-based IMS application generating IPTV session set-up signals based on a user input; communicating said IPTV session set-up signals to an IMS gateway connected to said set top box in a home network; said script-based IMS application receiving, from said IMS gateway, address information associated with media data available from a media server in a global network connected to said home network; and said script-based IMS application forwarding said address information to an embedded OITF system of said set top box to trigger generation, within an IPTV session, of a media request for said media data and destined to said media server, said script-based IMS application receiving, from said IMS gateway, a service provider selection page comprising, for each available service provider present in said global network, a provider identifier associated with the service provider but pointing towards said IMS gateway; and said script-based IMS application transmitting, to said IMS gateway, a service provider command comprising a provider identifier of a selected service provider and generated based on a user input. The user input is configured to trigger the script-based IMS application to generate a service provider command comprising the provider identifier of the selected service provider.

The protocols and logics required for conducting the IPTV and IMS session communication with the IMS gateway therefore do not need to be pre-installed at the set top box but can instead be handled by the browser-implemented script-based IMS application. This means that IMS services can be provided to all set top boxes having a web browser implementing a declarative application environment.

### BRIEF DESCRIPTION OF THE DRAWINGS

The invention, together with further objects and advantages thereof, may best be understood by making reference to the following description taken together with the accompanying drawings, in which:
Fig. 1 is a schematic overview of an IP television (IPTV) distribution network;
Fig. 2 is a schematic overview of a structural architecture of a set top box (STB) according to prior art in a home network;
Fig. 3 is a schematic overview of a structural architecture of a STB according to an embodiment in a home network;
Figs. 4A and 4B are signal diagrams illustrating an embodiment of setting up an IP Multimedia Subsystem (IMS) session;
Figs. 5A and 5B are signal diagrams illustrating another embodiment of setting up an IMS session;
Fig. 6 is a signal diagram illustrating an embodiment of setting up and ending a Video on Demand (VoD) session;
Fig. 7 is a signal diagram illustrating an embodiment of setting up, controlling and ending an IMS session involving scheduled content;
Fig. 8 is a signal diagram illustrating another embodiment of setting up and controlling an IMS session involving scheduled content;
Fig. 9 is a schematic block diagram of an embodiment of an IMS application;
Fig. 10 is a schematic block diagram of an embodiment of a STB; and
Fig. 11 is a schematic block diagram of an embodiment of an IMS gateway (IG).

### DETAILED DESCRIPTION

Throughout the drawings, the same reference numbers are used for similar or corresponding elements.

Embodiments relates to provision of Internet Protocol (IP) Multimedia Subsystem (IMS) services to user terminals and set top boxes without the need for any preconfigured IMS applications present in the set top boxes as installed embedded or native applications.

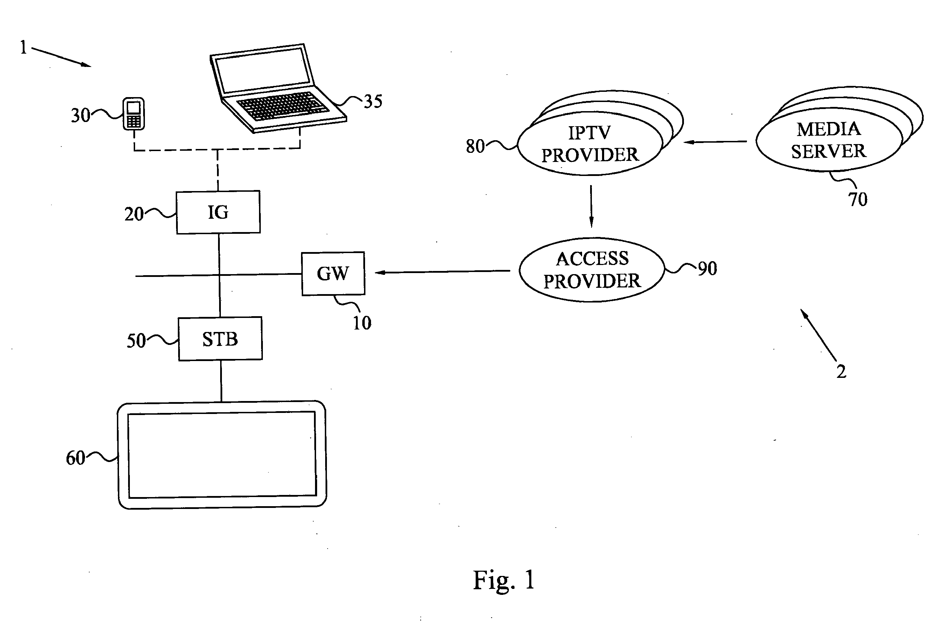

Fig. 1 is a schematic overview of an IP Television (IPTV) system basically comprising two interconnected networks, a home network 1 and a global network 2. The global network 2 can be a managed or proprietary network operated by a network operator. Alternatively, the global network 2 is a non-managed or open network, typically denoted Open Internet in the art. In either case the global network 2 houses one or more content providers or media servers 70 having access to media content that is to be distributed to user equipment or set top boxes 50 present in the home network 1. These media servers 70 can be network-arranged, dedicated media servers or indeed represent consumer generated media in the form of media available from other users in their respective home networks.

The media is generally available to the home network 1 through one or more IPTV providers or IPTV application servers 80 and one or more access providers 90. The former represents the network-implemented entity that provides IPTV services to the users of the IPTV system, whereas the latter provides the actual transport and access to the provided services to the home network 2.

The global network 2 illustrated in Fig. 1 should merely be seen as an illustrative example of a global network portion of an IPTV system. Other network solutions comprising more or less network entities than the ones illustrated in the figure can alternatively be used without any impact on the teachings of the embodiments. For instance, in some networks a single operator or server can take the role of all or some of the functionalities: media server 70, IPTV provider 80 and access provider 90.

The home network 1, sometimes denoted as residential network or consumer network, can, in some embodiments, be based on Ethernet or one of the existing wire home networking technologies, such as Home Phoneline Networking Alliance (HomePNA) or the Telecommunication Standardization Sector (ITU-T) G.hn standard, which provides a possibility of creating high-speed local area network using existing home wiring. Other examples include different Local Area Network (LAN) solutions. This means that IPTV-related services, including IMS services, can be delivered over IP and the customer's broadband connection, such as Asymmetric Digital Subscriber Line (ADSL), Very high-rate Digital Subscriber Line (VDSL), Public Ethernet, etc. Also wireless network solutions can be used to establish the local network, including combinations of wired and wireless techniques.

The devices 20-50 of the home network 1 are generally interconnected to the global network 2 through a gateway (GW) 10 providing an interface between the two networks 1, 2. This gateway 10 operates in a similar way to a router in terms of forwarding data from the home network 1, such as user generated IPTV service requests, to the global network 2 and forwarding data from the global network 2, such as IPTV services and associated media, to the home network 1.

In the embodiment illustrated in Fig. 1, the home network 1 also comprises a Home IMS gateway (HIGA), often simply denoted IMS Gateway (IG) 20 in the art, generally managing IMS termination and interworking within the home network 1. The IG 20 can consequently have a wired or wireless connection to one or more IMS-capable devices 30, 35, 50 non-limitedly represented by a mobile telephone 30, a computer/laptop 35 and a general set top box (STB) in the figure.

The IG 20 can be a stand-alone device that is connected to the GW 10 as is illustrated in the figure. Alternatively, the functionality of the IG 20 can be provided in the same physical device as the GW 10, thereby basically combining the IMS gating and the network interconnection and gating in single device. Such a device could then be a modem or other gateway unit.

Although the IG 20 is illustrated as forming part of the home network 1 in the figure, this should merely be seen as an illustrative embodiment. Also network-implemented IG solutions are possible and within the scope of the embodiments, wherein the IG 20 is instead fully or at least partly implemented in the global network 2. In such a case, the IG 20 is advantageously implemented in a network node and can be co-arranged with other functionalities of the global network 2, such as IPTV provider 80 and/or access provider 90.

The home network 1 typically comprises one or more set top boxes 50 that are devices capable of processing and rendering the IPTV media. There is a vast number of different user equipment, terminals and devices that can take the role of a set top box 50 in the home network 1. Some non-limiting examples include a decoder, computer, etc. having the capability of receiving media data from the IPTV provider 80 and gateway 10 and processing, i.e. decoding and rendering, the media data on an included or connected display screen 60. In contrast to traditional decoders and set top boxes in digital TV systems, in an IPTV system, the set top box 50 provides two-way communications on an IP network and allows for decoding streamed media. Also mobile devices 30, 35, wirelessly communicating with the gateway 10 optionally through the IG 20, can operate as set top boxes according to the embodiments. Thus, the mobile telephone 30 and computer/laptop 35 illustrated in the figure can be regarded as set top boxes. The set top box can also be integrated in the display device, e.g. an IPTV enabled TV.

In the following, set top box is used to denote any user equipment, terminal or device capable of being provided in a home network and running applications for the purpose of providing IPTV services to one or more users and having functionality of processing IPTV-related media for display on a connected display screen, such as for the media form of video, images, text, etc., and/or play back by a connected loudspeaker, such as for the media form of audio.

In the art, Open IPTV Terminal Function (OITF) or IPTV Terminal Function (ITF) are sometimes employed to denote the set top box and the functionalities therein needed for setting up and managing an IPTV session. However, in the present document set top box is consistently used to denote the device designed to be provided in the home network and provide IPTV services, including IMS services, to users. The expression "set top box" therefore also encompasses those devices or device-implemented functionalities that are denoted OITF and ITF in the art.

IPTV should be interpreted broadly to encompass multimedia services, such as television, video, audio, text, graphics, data delivered over IP based networks to user equipment in a home network, where local processing, i.e. rendering and/or play back of the media is effected.

A set top box generally comprises or is capable of running various IPTV-related applications providing IPTV services to the users. In traditional IPTV systems, these IPTV-related applications and in particular IMS applications have mainly been in the form of embedded or native applications. Such embedded applications are locally installed in and run at the set top box. The set top box can then be pre-equipped with such installed embedded applications. In the following "embedded OITF system" denotes those parts of the OITF functionality of a set top box that are embedded and native to the set top box. This means that this embedded OITF system is locally installed in and run at the set top box and is typically pre-installed therein upon sale. The set top box thereby comprises the hardware structures and/or program code elements for effectuating, when being run by a general processor of the set top box, the functionalities of the OITF system. The embedded OITF system therefore has its own direct user interaction, such as remote control, keyboard, mouse, etc., and audio/video rendering and, optionally grabbing functionalities, such as display, speakers, cameras, microphones, or can be directly connected with other audio/video rendering/grabbing devices without passing through home network communication.

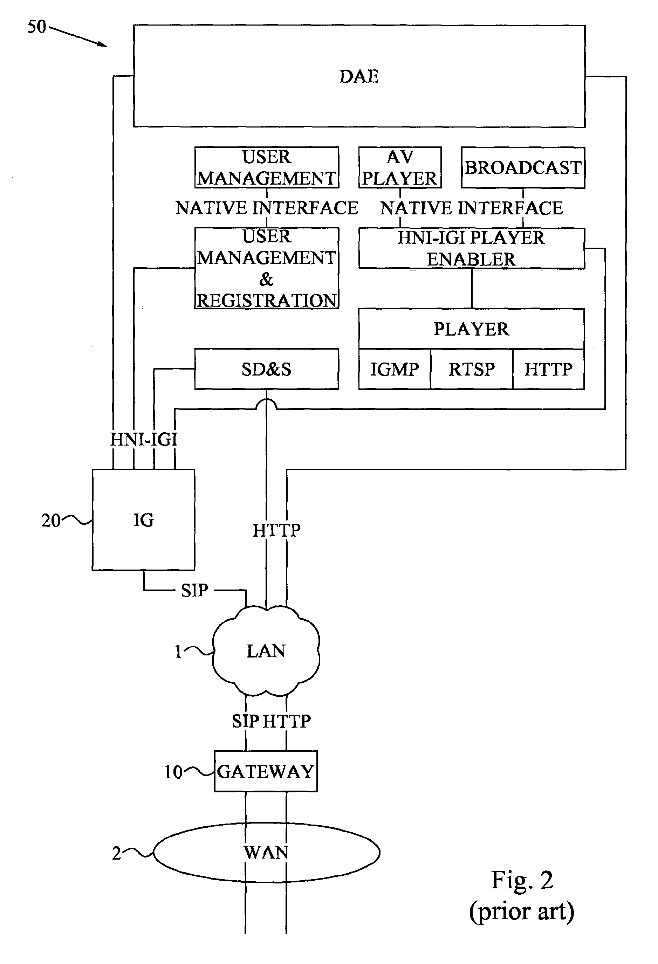

Fig. 2 schematically illustrates an overview of a set to box 50 with implemented OITF functionality according to the prior art. This OITF is responsible of providing IPTV and IMS services to the set top box 50 as defined by the Open IPTV Forum. In the figure, the communication that is based on Home Network Interface - IMS Gateway Interface (HNI-IGI) relates to IMS sessions. Thus, a HNI-IGI player enabler can be provided as an interface between an Audio/Video (AV) player, broadcast application, a media player and the IG 20. Furthermore, user management, registration and service discovery and selection (SD&S) use HNI-IGI messaging to communicate with the IG 20. These received HNI-IGI messages are generally translated by the IG 20 into Session Initiation Protocol (SIP) messages that are forwarded through the local area network (LAN) to the gateway 10 and then transmitted further up into the global network 2 represented as a wide area network (WAN) in the figure. In this context, the IG 20 may behave as a Hypertext Transfer Protocol (HTTP) server and the OITF behaves as an HTTP client. This means that the HNI-IGI messages are generally in the form of HNI-IGI HTTP requests or responses, such as:

```
 HTTP POST <IG URI>/<HNI-IGI message type>
 <HTTP headers>
 <X-OITF extension headers> or <X-HNI-IGI extension headers>
 Content-Type: <...>
 Content-Length: <Number>
 <Message body>
 
 HTTP/1.1 <HTTP response>
 <HTTP headers>
 <X-OITF extension headers> or <X-HNI-IGI extension headers>
 Content-Type: <...>
 Content-Length: <Number>
 <Message body>
```

A HNI-IGI message can by of SIP type, in which the message is an HNI-IGI message corresponding to a SIP message. The IG 20 translates this into a corresponding SIP message by adding and changing the relevant headers. A HNI-IGI message of AUX type is an HNI-IGI message that does not translate to a SIP message. The IG 20 instead processes this message and responds accordingly. For more information of HNI-IGI messaging and the communication between the OITF and the IG, reference is made to Open IPTV Forum - Release 1 Specification, Volume 4 - Protocols, V1.0, January 6, 2009, and in particular section 5.5 relating to Protocols System Infrastructure Functions and 5.5.1 relating to OITF-IG Interface (HNI-IGI).

This means that set top boxes 50 not having such locally installed IMS applications and the logics for conducting communication with the IG 20 cannot take advantage of the vast amount of available IMS services that are currently available in IPTV systems or will be designed in the future. The set top box 50 then lacks the necessary functionality for communicating with the IG 20 for the purpose of requesting, setting up and managing IPTV and IMS sessions.

Embodiments as disclosed herein replace the traditional native or embedded IMS applications with a script- and browser-based IMS application. Such script-based applications to be run in a web browser environment are sometimes denoted web applications in the art and in particular Declarative Application Environment (DAE) applications within the field of IPTV. In clear contrast to an embedded IMS application, a script-based IMS application is accessed via a web browser over a network, such as the internet or an intranet. The script-based application is generally a software application coded in a browser-supported language. The script-based application is reliant on a web browser to render the application executable.

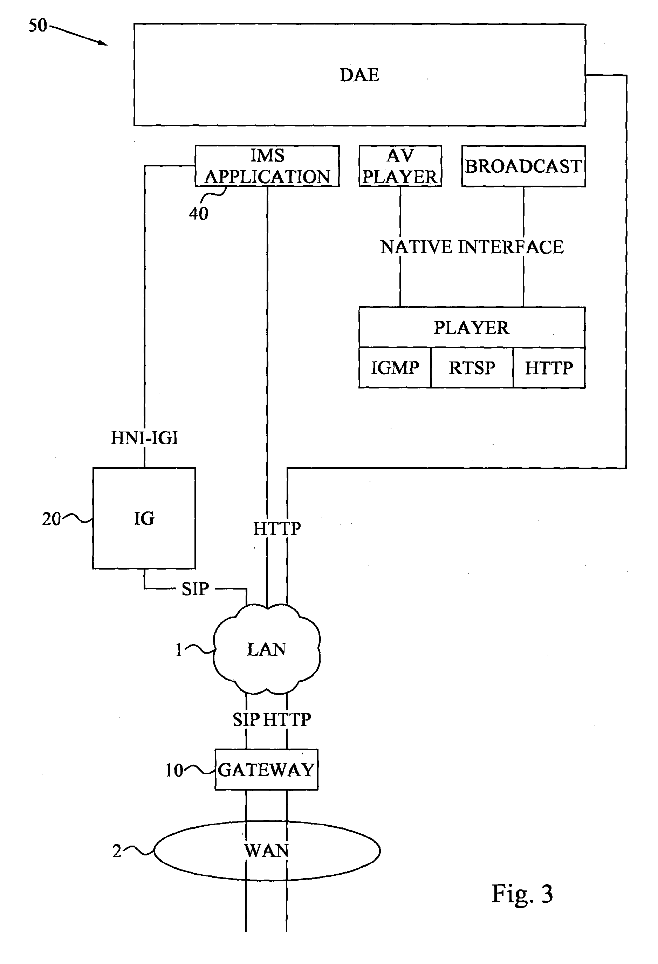

Fig. 3 is a corresponding overview of a set top box 50 with embedded OITF system and a script-based IMS application 40 according to an embodiment. In this embodiment, the HNI-IGI signaling with the IG 20 on behalf of the set top box 50 and the embedded OITF system is done through a script-based IMS application run in a browser page.

The script-based IMS application 40 is provided in the DAE environment, i.e. browser-run, and preferably uses an HTTP interface to the IG 20. This means that the script-based IMS application 40 can use the standardized HTTP-based interface, i.e. HNI-IGI, to effectuate the signaling with the IG 20 on behalf of the set top box 50.

As is seen by comparing Figs. 2 and 3, the necessary HNI-IGI signaling between the embedded OITF system and the IG 20 is now managed by the script-based IMS-application instead of being conducted between different functionalities in the embedded OITF system and the IG 20 as in the prior art. This means that in clear contrast to the prior art in Fig. 2, the set top box 50 of Fig. 3 does not have to have any preinstalled, native or embedded IMS application and IMS protocol stack. The script-based IMS application 40 consequently operates as a gateway between the embedded OITF system and functions and embedded applications that are used to process IMS data, such as the player or AV player, and the IG 20.

Generally, the IMS signaling functionality is thus moved from the native or embedded code or structures of the set top box 50 to the script-based IMS application 40. This means that functionality for service discovery, subscription and registration is advantageously provided in the IG 20 instead of the embedded OITF system. However, it is not the intention of the embodiments to limit where these functions are performed. In general all or only some of them can be performed in the IG 20. This if further described in more detail herein.

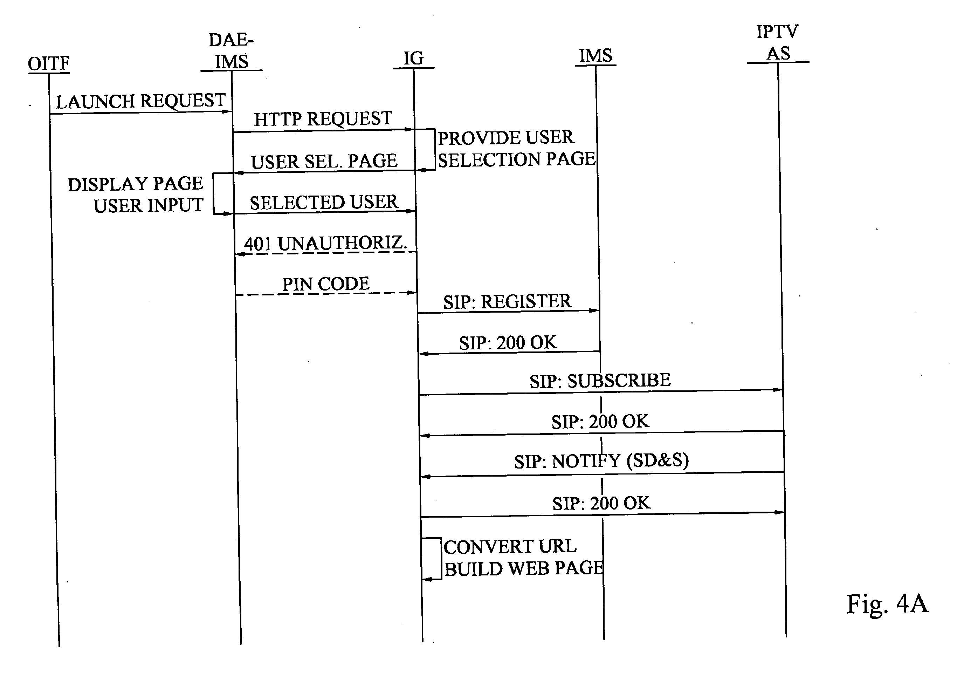

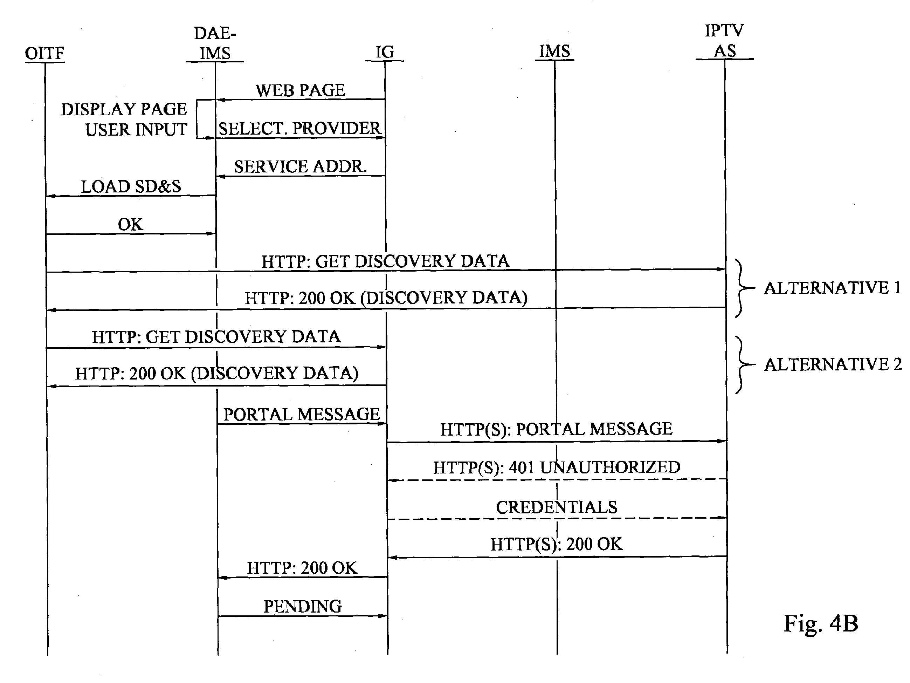

Figs. 4A and 4B are schematic signaling diagrams illustrating an embodiment of OITF initiation for the purpose of activating the set top box so that it is ready for setting up an IPTV or IMS session, if this is desired. In the figures, "OITF" represents the embedded OITF system that is generally provided as embedded or native code and functions provided, typically as a computer program product directly loadable into the internal memory of a computer or processing unit and comprising software code portions for performing the necessary functions. A computer should be interpreted broadly to include any device or terminal, whether stationary or portable, comprising embedded OITF functionality as described herein. Such a computer could be any of the previously mentioned examples of set top box. The "DAE-IMS" application represents the script-based IMS application run in a web browser, i.e. DAE, in the set top box. In a typical embodiment, the embedded OITF system and the script-based IMS application are present in the same physical device but could alternatively be housed in different devices having a wired or wireless connection between the devices. IPTV AS denotes an IPTV application server, which corresponds to the IPTV (service) provider of Fig. 1.

The initiation procedure generally begins by starting up the embedded OITF system if this is not already done. This is conducted according to prior art procedures. Correspondingly, the IG conducts provisioning of user identifiers and startup, such as using Dynamic Host Configuration Protocol (DHCP), which is a network application protocol used to obtain configuration information for operation in an IP network. It is particularly preferred if the IG can implement DHCP options 124 and 125 relating to retrieval of service discovery information.

Once the embedded OITF system has been started it preferably automatically launches a start-up request that is an internal call to direct the script-based IMS application or more correctly the web browser to a certain address, such as http://IG.fixed.local, of the IG. The IG then preferably has a fixed fully qualified domain name (FQDN) sometimes referred to as an absolute domain name. A FQDN is a domain name that specifies its exact location in the tree hierarchy of the Domain Name System (DNS). This fixed FQDN points to the IG so that the IG acts as a DNS server itself to point that FQDN to itself. The FQDN is preferably fixed implying that it can be coded or stored into the embedded OITF system code or structure without the need for the IG to inform the embedded OITF system of the FQDN each and every time an initiation procedure is conducted. Alternatively, the embedded OITF system then has to request this FQDN from the IG using the script-based IMS application or from some other unit.

The above described method of routing messages to the IG has the added value that if there is no IG, the access network provider, which is responsible for the DNS server, can resolve the IG FQDN and point it to a web server. This web server can e.g. display commercial information how the subscriber can subscribe to IPTV service.

Based on the received start-up request, the IG provides a user selection page that is returned to the script-based IMS application for display to the user. This user selection page can be pre-installed in the IG or the IG generates in on demand based on the reception of the start-up request. The user selection page comprises at least one user identifier of available users that can use the set top box in which the embedded OITF system is provided. The user identifier(s) can be any identifier(s) or information allowing identification of the user(s). Non-limiting examples include user name, given name and optionally family name, computer-generated user identifier selected by the IMS, etc.

The script-based IMS application then presents the received user selection page by means of the web browser on a display screen of or connected to the set top box. The user can then select among the different users that are provisioned at the IG. For instance, a family consisting of a father, mother and two kids can have five different provisioned users, including the default user profile, which is not personalized. The user clicks or otherwise selects the particular user identifier or name that he/she would like to use. The activation of the user input, such as mouse key, touch sensitive screen or keyboard key, generates a user selection command comprising the user identifier associated with the selected user. Optionally, an authentication procedure is initiated, in which the user is urged to enter a password or PIN code in order to get access to the selected user profile. This authentication procedure can be conducted by the generation and transmission of a HTTP: 401 UNAUTHORIZED message to the script-based IMS application, urging the user to enter a password or PIN code that is returned to the IG.

Once the selected user has been notified to the IG, a register request relating to the selected user is composed by the IG. The register request is preferably a SIP: REGISTER message comprising the user identifier of the selected user. The IG transmits this register request to the IMS. The IMS returns an acknowledge message in the form of SIP: 200 OK. This signaling is conducted as in the prior art but with a significant difference. It is the IG that conducts the user registration to the IMS instead of the embedded OITF system as in the prior art.

Correspondingly, a subscribe procedure involving the generation and transmission by the IG of a subscribe request, typically in the form of a SIP: SUBSCRIBE message followed by the return of an acknowledgement, SIP: 200 OK from the IPTV AS is performed. The IPTV AS also transmits a SIP: NOTIFY message relating to Service Discovery and Selection (SD&S), which the IG responds to by transmitting a SIP: 200 OK. The novel feature here is that the IG and not the embedded OITF system that is involved in the subscription and SD&S communication with the IPTV AS.

The IG then creates a web page comprising information of the IPTV services, including IMS services, available to the subscribed and registered user and notified from the service provider, i.e. the IPTV AS, through the SD&S notification. The IG further translates or converts the address information received in response to the subscribe request to converted address information pointing towards the IG. For instance, the IG advantageously map each universal resource locator (URL) received from the IPTV AS to point at the IG instead. This can be conducted by mapping each notified URL to a local URL in the IG or by actually rewriting the URLs.

The IG may optionally also associate the IPTV service choice from the IPTV AS with the real IPTV provider in order to handle Transport Layer Security (TLS) and authentication as a proxy.

An advantage of composing and providing a service provider selection page at the IG, is that the IG can add IPTV service choices from not only a single IPTV service provider or IPTV AS but actually from different IPTV service providers. For example, the IG may be installed or connected to a traditional ADSL-modem. In such a case, the IG may actually communicate not only with the IPTV AS but also, for instance, with a cable TV provider that can provide media services to the user inside the IPTV session. The means that the IG can collect information of services available from multiple different service providers, including different technologies, and compose this information into a single presentation page that is displayed for the user using his/her web browser.

The created service provider selection page is transmitted to the script-based IMS application to be displayed for the user in the web browser on a display screen of or connected to the set top box. The displayed web page lists the IPTV service choices provided by the IPTV AS based on the SD&S procedure. Optionally, TLS and/or authentication can also be handled. The displayed web page lists different service provider identifiers, names or information that allows the user to identify and select among the available service providers. These service provider identifiers can be the converted address information generated by the IG or other information or data provided in the service provider selection page and provided by the IG based on the data received in the SD&S procedure.

An advantage of this embodiment is that the IG can present service providers and selection information that is not of IPTV nature. The non-IPTV data may be e.g. cable, digital terrestrial or satellite TV. When the user of the set top box selects these services they are converted from their original nature into IPTV format, in order to execute service at a standard IPTV terminal and inside an IPTV session.

The user then selects one of the service providers by activating a user input of or connected to the set top box. The user input activation triggers the script-based IMS application to generate a service provider command comprising the provider identifier of the selected service provider. In a preferred embodiment, the service provider command is generated by the script-based IMS application based on the converted or rewritten URLs provided with the service provider selection page. Since these converted URLs point back to the IG and not the original IPTV application server, the service provider command will be destined to the IG.

The IG returns data relating to the selected service provider in the form of a service selection message. The service selection message preferably comprises address information of the IPTV services available at the selected service provider. The service selection message is transmitted to the script-based IMS application, which generates and forwards a service description load command to the embedded OITF system. This service description load command includes, for instance, the URL of the service provider and type information. The embedded OITF system preferably returns an acknowledgement or OK message. The embedded OITF system also launches an HTTP request to get discovery data from the IPTV AS. This discovery data can, for instance, be in the form of an Electronic Program Guide (EPG) - listing IPTV content and media available from the service provider, allowing a user to navigate, select and discover media content, for instance, by time, title, channel, genre, etc. Also other types of descriptive information informing the user of the available IPTV services at the IPTV AS can be used. The IPTV AS returns an acknowledgment with the discovery data, such as in the form of a HTTP: 200 OK message.

Alternatively, if the IG has added another service provider to the service provider selection page, such a cable TV distributor or Digital Video Broadcasting (DVB) content, the HTTP get discovery data is transmitted to the IG as the IG then points discovery to itself. The IG will then return the acknowledgement with the discovery data to the embedded OITF system.

In an embodiment, the script-based IMS application generates and transmits a portal communication message to the IG to load the portal page, i.e. service provider data, provided in the service provider command sent to the IG. The IG proxies this request and may convert the HTTP portal message to a HTTP Secure (HTTP(S)) portal communication that is sent to the IPTV AS. Optional Generic Bootstrapping Architecture (GBA) can be used to provide security mechanism. The IPTV AS then returns a HTTP(S): 401 UNAUTHORIZED message to the IG, followed by the return of credential information if the GBA security mechanisms are used. The IPTV AS also confirms reception of the HTTP(S) portal communication by a response acknowledgement, HTTP(S): 200 OK, to the IG. This acknowledgement is forwarded to the script-based IMS application by the IG to notify that the initiation procedure has been successful.

The script-based IMS application preferably returns a so-called pending command, such as in the form of a HNI-IGI PENDING_IG message, which is a pending HTTP request. This request allows the IG to respond when it needs to contact the embedded OITF system as a result of an incoming request from the network, such as the IPTV AS.

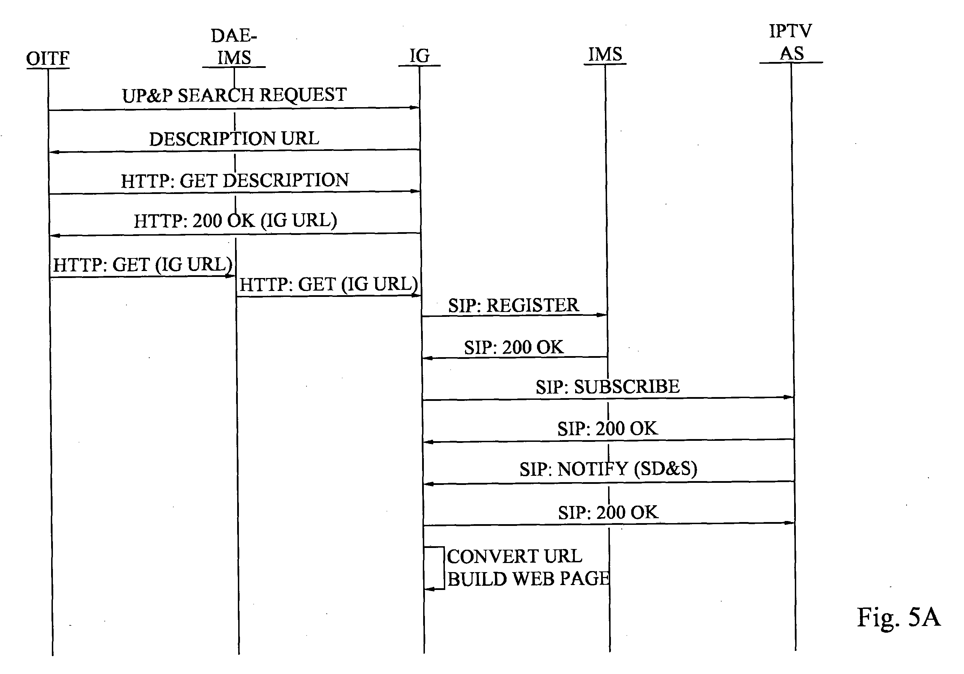

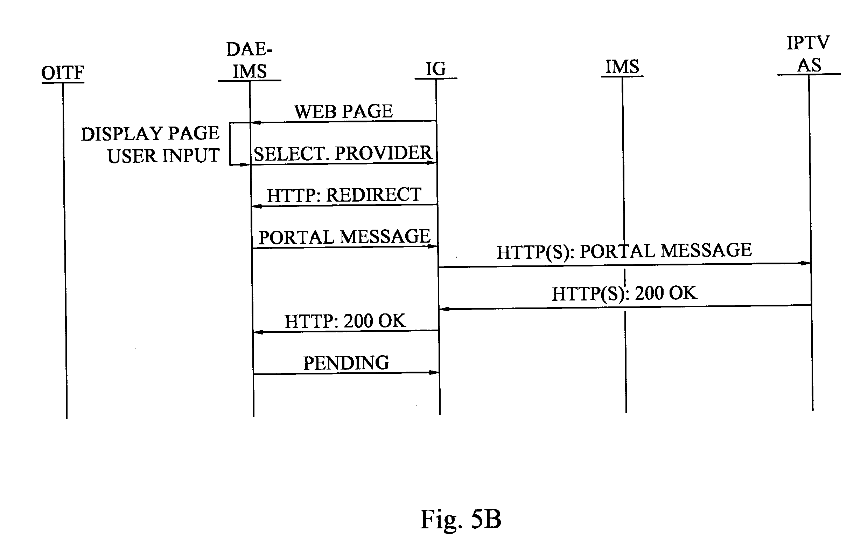

The above described signal procedure, which is illustrated in Figs. 4A and 4B, can be conducted without usage of Universal Plug and Play (UPnP). UPnP is a set of computer protocols that allow devices to connect seamlessly and simplifies the implementation of home networks for data sharing, communications and entertainment. If the devices, i.e. set top box, and IG-implementing device are capable of communicating with each other using UPnP a somewhat different initiation procedure can be used as illustrated in Figs. 5A and 5B.

The procedure starts with the startup of the embedded OITF system and provisioning and startup of the IG in similarity to Fig. 4A. The following five signaling steps illustrated in Fig. 5A and not present in Fig. 4A, relate to UPnP signaling. Thus, in this embodiment another bootstrapping procedure is conducted. Whereas the embodiment in Fig. 4A is based on a fixed IG FQDN, Fig. 5A uses UPnP. The embedded OITF system therefore compiles and transmits a UPnP search request that forms part of the UPnP discovery protocol. The IG returns a response message comprising few, essential specifics about the IG and in particular a URL or pointer to more detailed information about the IG.

After the embedded OITF system has discovered the IG it still knows very little about the IG. In order to learn more about the IG and its capability, or to interact with it, the embedded OITF system retrieves the description of the IG from the URL provided in the discovery message, typically in the form of a HTTP: GET message. The IG returns the requested method, such as supported methods and its URL (IG URL) in the form of a HTTP: 200 OK response. A HTTP GET message with the informed IG URL is sent to the script-based IMS application and forwarded to the IG.

The following procedure involving the registration, subscription and SD&S procedure is conducted in the same way as was discussed above in connection with Figs. 4A and 4B.

The IG then compiles and presents the compiled service provider selection page to the user in the web browser by means of the script-based IMS application. The information of the selected service provider is returned to the IG in the service provider command. In this embodiment, the IG then compiles and transmits service provider data, such as in the form of a HTTP: REDIRECT message to a web offering or offering page provided based on the SD&S and presented by the script-based IMS application on the web browser. The following communication in Fig. 5B is similar to Fig. 4B. The GBA security mechanism that is an optional feature has been omitted in the embodiment illustrated in Fig. 5B.

Thus, in the disclosed signal diagrams the IG will handle the managed support, such as register procedure, and no native HNI-IGI support is required. The SD&S data received for the IPTV AS is parsed by the IG and is used for generating a web page that is presented to the user by means of the script-based IMS application and the web browser of the set top box.

In Figs. 4A to 5B, the IPTV service provider has been exemplified as a single entity, i.e. IPTV AS. Alternatively, the IPTV service provider can comprise a dedicated IPTV Controller and an IPTV Application. In such a case, the SD&S communication is preferably conducted between the IG and the IPTV Controller, whereas the portal communication is instead performed between the IG and the IPTV Application.

In an alternative approach, the embedded OITF system can conduct the service discovery. In such a case, the service discovery can be conducted with DHCP and without IMS. The IG will then respond to DHCP from the embedded OITF system and present service provider discovery information without the IMS. Today there are three options in DHCP option 124/125: IP address, DNS name or IMS, the latter is being used for managed networks. This means that in this embodiment no IMS is needed but other options for DHCP can be used instead.

Figs. 4A and 5A illustrate various embodiments of bootstrapping. In yet another embodiment DHCP is used to find the IG. Such an embodiment works similar to the UPnP embodiment except that DHCP would be used instead.

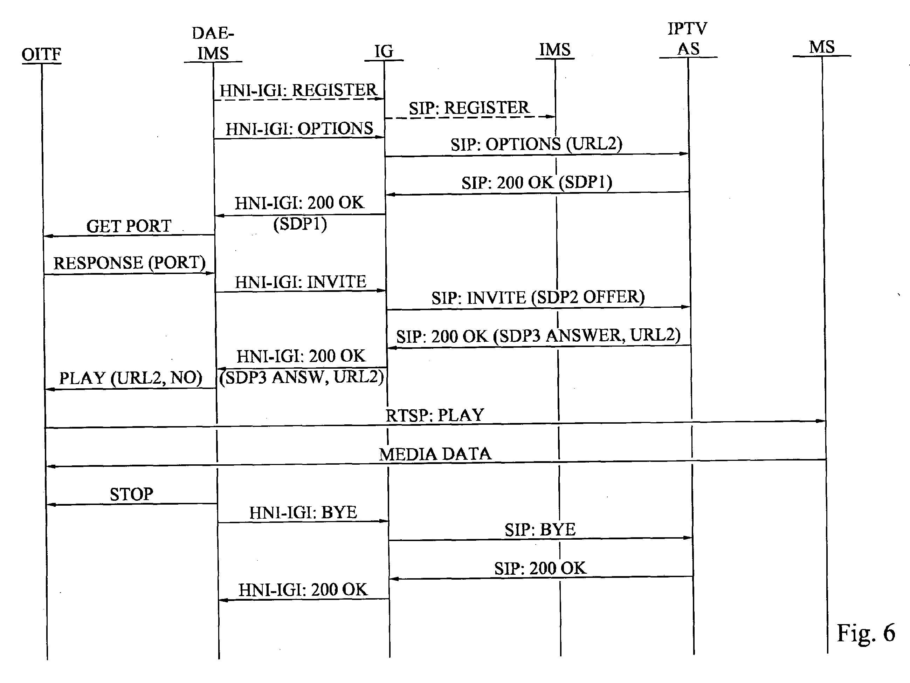

Fig. 6 is an example of an IPTV session in the form of Video on Demand (VoD). In clear contrast to the prior art solutions, the HNI-IGI-based communication illustrated in Fig. 6 is performed between the script-based IMS application running in the web browser and the IG, compare with Fig. 3. Prior art solutions have a pre-configured native code in the embedded OITF system for effecting such HNI-IGI communication and therefore has HNI-IGI messaging between the embedded OITF system and the IG, see Fig. 2.

In an optional step, the script-based IMS transmits a HNI-IGI: REGISTER message comprising an identifier of the relevant user, if there is a need to change user. The IG converts the HNI-IGI message to a corresponding SIP: REGISTER message comprising the user identifier and transmits it to the IMS. If there is no need to change the registered user this signaling can be omitted.

The script-based IMS application compiles a HNI-IGI: OPTIONS request to ask for server capabilities of the IPTV AS. The OPTIONS request typically originally comes from the web server or from the local script-based IMS application. The OPTIONS request preferably comprises an identifier of the requested VoD data, such as in the form of an URL or other address information. The IG receives the HNI-IGI messages and processes it into a traditional SIP: OPTIONS request and replaces the included identifier with an identifier URL2. The SIP: OPTIONS request is transmitted to the IPTV AS that returns a response message, SIP: 200 OK comprising information, SDP1, utilized by the script-based IMS application to initiate an IPTV session. The attached information includes a session description preferably in the Session Description Protocol (SDP) format. The response is returned to the IG, which maps the SIP response to a corresponding HNI-IGI response and forwards the message to the script-based IMS application.

The script-based IMS application requests information of the video and preferably audio ports to be used in the VoD session from the embedded OITF system with a port request. The embedded OITF system returns a response message with the requested information, i.e. at least one port identifier of the relevant video and audio ports.

The script-based IMS application generates and transmits an HNI-IGI: INVITE message, preferably with a SDP offer including information of the video and audio ports to which the media data should be sent. This invite message represents a request for an IPTV session. The IG processes the invite message and transforms it into a SIP: INVITE message that is sent to the IPTV AS. A response message, SIP: 200 OK, comprising a preferred SDP answer, including address information (URL2) of the requested media, is returned to the IG. The IG converts the response message into a HNI-IGI: 200 OK response before transmission to the script-based IMS application.

The script-based IMS application now has access to the address information associated with the media data as received from the HNI-IGI: 200 OK response. The script-based IMS application therefore preferably generates a play request with the address information, i.e. URL2, and sends it to the embedded OITF system to cause it to request the desired media stream, i.e. VoD media stream, from the media server (MS). This play request preferably includes an indication that no setup procedure should be performed by the embedded OITF system since the script-based IMS application has already conducted such a setup procedure with the IG and IPTV AS.

A media request in the form of a Real Time Streaming Protocol (RTSP) PLAY request is then composed and transmitted by the embedded OITF system to the media server dentified by URL2. The media server returns the requested unicast stream of VoD data to the embedded OITF system, where the data is decoded and rendered to display the video on an included or connected display screen and play back audio on an included or attached loudspeaker.

If the user elects to stop the VoD session, he/she activates a stop function on the web page presented on the web browser by means of the script-based IMS application, causing generation of a stop message that is forwarded to the embedded OITF system to stop the rendering of the media data. A request for terminating the session in the form of a HNI-IGI: BYE message is also composed and sent to the IG that transforms it to a SIP: BYE message that is sent to the IPTV AS to terminate the session and stop the delivery of the media data. A SIP: 200 OK response is returned to the IG and translated into a HNI-IGI: 200 OK message that is forwarded to the script-based IMS application to indicate that the session has been terminated.

The script-based IMS application running in the web browser, thus, conducts all the HNI-IGI signaling with the IG in clear contrast to the prior art. It also effectuates port pre-fetching to forward this information to the IPTV AS via the IG. The script also generates an indication of RTSP signaling with a preferred indication that no RTSP: SETUP procedure should be initiated by the embedded OITF system.

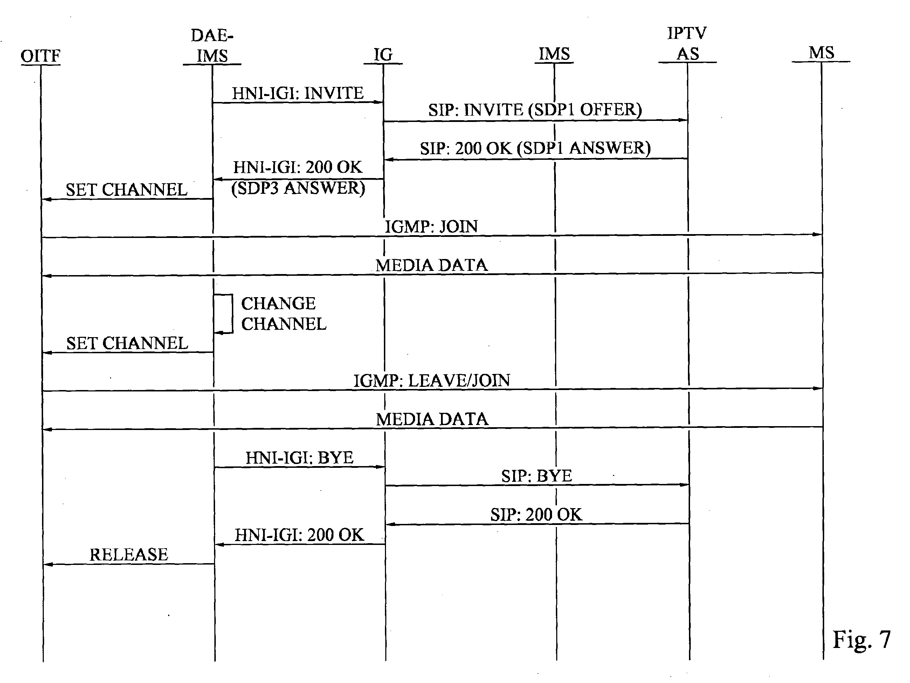

Fig. 7 is a signal diagram illustrating another embodiment of setting up and managing an IPTV session. In this example, a so-called scheduled content session is illustrated. Scheduled content relates to when the playout schedule is fixed by an entity other than the user and the content is delivered to the user for immediate consumption. This can in the form of providing different TV or media channels to the users. Multicast is commonly used to deliver scheduled content services in IPTV, but as was mentioned before the source is not limited to IPTV but can instead be non-IPTV service providers, such as cable, digital terrestrial or satellite TV, which the IG has entered in the service provider selection page as discussed above in connection with Fig. 4B.

The procedure starts with the optional user registration procedure, if necessary.

In this example, the available media channels are known in advance by the script-based IMS application either through notification by the IG, the network, i.e. IPTV AS or a local DAE interface. The script-based IMS application compiles and transmits a HNI-IGI: INVITE message with a preferred SDP offer to the IG that transforms it into a corresponding SIP: INVITE message destined to an IPTV AS. The IPTV AS generates, based on the received message, a SIP: 200 OK response with a preferred SDP answer. This response is processed into a corresponding HNI-IGI response by the IG and is sent to the script-based IMS application.

The session description message received from the IG is used by the script-based IMS application to provide address information associated with the media data from the media source. In this embodiment, the relevant address information is the desired media channel, preferably in the form of a an Internet Group Management Protocol (IGMP) address of the media channel. The relevant media channel address is communicated to the embedded OITF system with a set channel command. The embedded OITF system uses this information for compiling and transmitting a media request, here represented by an IGMP: JOIN request, to the multicast source, i.e. media server. The set top box housing the embedded OITF system thereby joins the multicast or broadcast channel and starts receiving media data of the multicast stream. This received data is decoded and then rendered for display and play back to the user.

If the user would like to change channel during the media session, the user simply selects, on the web page presented in the web browser by means of the script-based IMS application, one of the other available media channels. The script-based IMS application then compiles and transmits a new set channel command to the embedded OITF system comprising the IGMP address of the new media channel. A combined IGMP: LEAVE/JOIN message or separate IGMP: LEAVE and IGMP: JOIN messages are then compiled and sent to the multicast source to cause the source to stop delivery of media data of the old channel and instead start delivery of media data of the new channel.

If the user then would like to stop the media session, he/she activates a stop function on the web page causing the generation and transmission of the HNI-IGI: BYE message as described above in Fig. 6. The script-based IMS application also indicates to the embedded OITF system to end the session through a release message.

In the above described embodiment, media channel is set based on IGMP address. In such a case, necessary data and parameters can be fetched from a Broadcast Discovery Record. This can be done through reading an XML-document by the script-based IMS application.

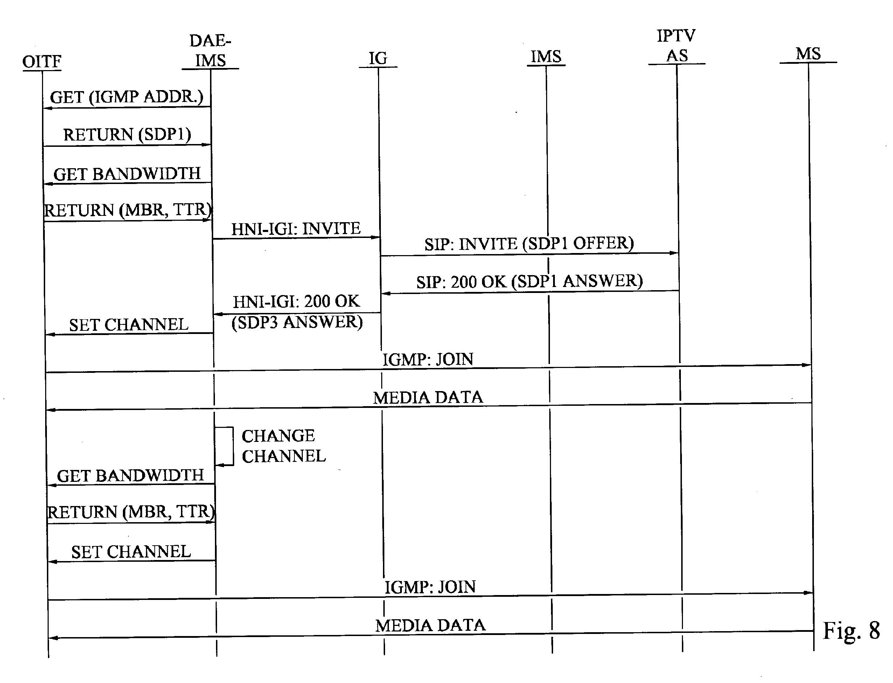

Fig. 8 illustrates an alternative approach, where the Broadcast Discovery Record is included in the embedded OITF system. The script-based IMS application then requests the SDP data, and in particular the IGMP address, to be used in a HNI-IGI: INVITE from the embedded OITF system or code. This means that the desired IGMP address of a selected media channel is requested based on an included identifier of the media channel. This identifier is provided to the script-based IMS application from the set-up procedure as discussed above in connection with Figs. 4A-5B. The embedded OITF system returns the SDP with the requested information.

The script-based IMS application may optionally also request, from the embedded OITF system, information of bandwidth characteristics of the desired channel. The embedded OITF system preferably returns such bandwidth information, such as maximum bit rate (MBR) and target transmission rate (TTR).

The remaining procedure is then the same as discussed above in connection with Fig. 7 except that, if a channel change is initiated by the user, a new optional bandwidth information request is preferably compiled by the script-based IMS application and transmitted to the embedded OITF system.

The above described embodiments disclosed in the signal diagrams of Figs. 4-8 should be seen as illustrative examples and the embodiments are not limited thereto. For instance, the message types and signaling protocols described above are based on the current standard situation. In the art, there is an ongoing development relating to standards. Thus, also other messaging types and standard protocols that can be used to achieve the desired effects described in the foregoing could instead be used and are within the scope of the embodiments.

Thus, in a general embodiment of setting up an IPTV session the method involves running a script-based IMS application in a web browser implemented in a set top box. The script-based IMS application generates IPTV session set-up signals based on activation of user input of or connected to the set top box. The session set-up signals are communicated to the IG connected to the set top box present in the home network. The script-based IMS application further receives, from the IG, address information associated with media data available from a media server in the global network connected to the home network. This address information is forwarded from the script-based IMS application to the embedded OITF system of the set top box to thereby trigger generation, within the IPTV session, of a media request for the media data and destined to the media server.

In a particular embodiment the script-based IMS application receives a start-up request from the embedded OITF system as illustrated in Fig. 4A and forwards this start-up request to the IG to thereby trigger generation of a user selection page. The method then further comprises reception at the script-based IMS application of the user selection page comprising at least one user identifier of available users. The script-based IMS application presents the user selection page by means of the web browser on the display screen and transmits, to the IG, a user selection command comprising an user identifier of the selected user and generated based on activation of a user input of the set top box.

The method preferably also comprises receiving, at the script-based IMS application and from the IG, a service provider selection page comprising respective provider identifiers associated with the service providers available to the user from the global network. These provider identifiers are, however, designed by the IG to point towards the IG instead of the service providers. The script-based IMS application transmits a service provider command comprising a provider identifier of a selected service provider. This service provider command is generated based on activation of a user input of the set top box and is transmitted to the IG.

The method preferably further comprises receiving, at the script-based IMS application and from the IG, a service selection message comprising the address information of the IPTV services available at the selected service provider. The script-based IMS application compiles and transmits a service description load command comprising the address information to the embedded OITF system.

Further preferred method step includes the transmission of a pending command comprising a pending HTTP request from the script-based IMS application to the IG to enable the IG to forward any incoming requests from the global network to the embedded OITF system.

If the particular IPTV session involves media on demand, such as VoD, the method further comprises transmitting a port request from the script-based IMS application to the embedded OITF system and transmitting an invite message comprising a port identifier of at least one media port of the set top box to the selected service provider, where this invite message has been generated by the script-based IMS application based on a response message comprising the at least one port identifier from the embedded OITF system.

In this case the forwarding of the address information by the script-based IMS application involves the transmission, to the embedded OITF system, of a play request comprising the address information associated with the requested media data available at the media server. The play request further comprises an indication that an IPTV session has already been set up by the script-based IMS application and, hence, no set-up procedure should be performed by the embedded OITF system.

In an alternative embodiment directed towards an IPTV session involving scheduled content as an illustrative example of media data type, the script-based IMS application receives a session description message from the IG and comprising the address information in the form of multicast or broadcast channel information. The forwarding of the address information to the embedded OITF system then involves transmitting the multicast or broadcast channel information to trigger the embedded OITF system to join the multicast or broadcast media channel.

The operation steps conducted by the IG in a general method of setting up an IPTV session involves transmitting a register request comprising a user identifier of the user of the set top box to the IMS. The IG also transmits a subscribe request destined to the IPTV service provider and receives address information in response thereto, where the address information relates to IPTV services available to the user from the global network. The IG maps the address information to converted address information associated with the services but pointing towards the IG. This means that generating and transmitting a service request based on converted address information will guide the service request to the IG and not to the IPTV service provider. The converted address information is compiled into a web page that is transmitted by the IG to the script-based IMS application running in the web browser at the set top box.

In a particular embodiment, the IG also adds auxiliary address information associated with at least so-called one auxiliary service provider to the address information from the IPTV service provider. This enables the IG to present further services to the user that can be selected and run within the current IPTV session as previously described. The auxiliary address information is converted or mapped into converted auxiliary address information associated with the auxiliary service provider(s) but pointing towards the IG. The converted auxiliary address information is then combined with the converted address information when generating the web page to be transmitted to the script-based IMS application.

In a particular embodiment the method further involves the IG generating a web page comprising user identifiers of multiple users potentially available for the set top box in response to a user selection request from the set top box. The IG then returns the web page comprising the user identifiers for display by the script-based IMS application using the web browser.

Furthermore, once the IG receives a pending command comprising a pending HTTP request from the set top box as previously described, the IG will transmit any incoming requests from the global network to the embedded OITF system of the set top box.

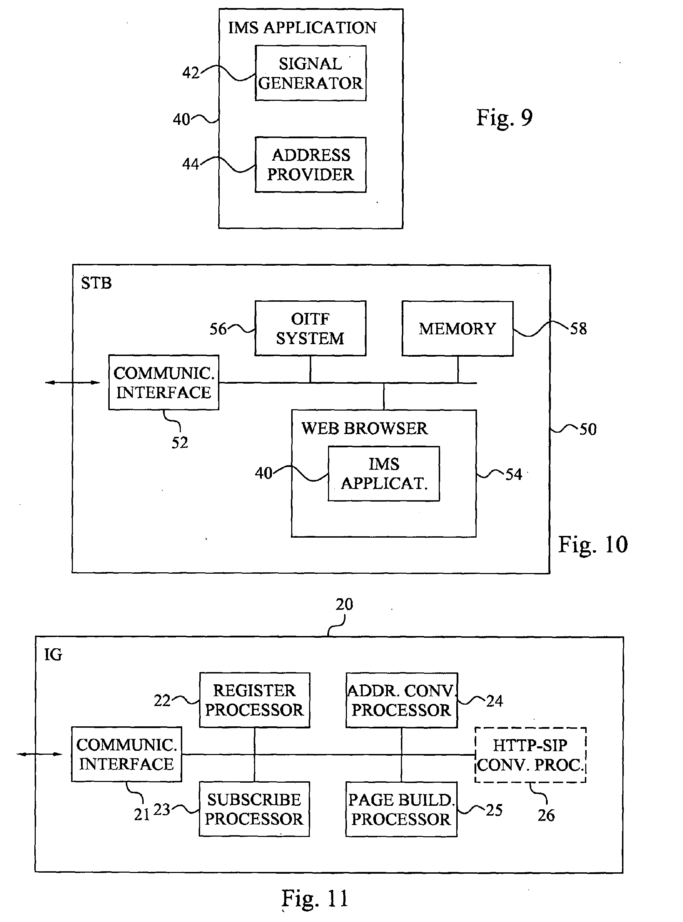

Fig. 9 is schematic block diagram of an IMS application 40 configured to be implemented in a set top bow within a home network. The IMS application 40 is a script-based IMS application 40 configured to be run by a web browser implemented in the set top box. The script-based IMS application 40 is generally a software application coded in a browser-supported language, such as JavaScript, Java, ECMAscript, Flash, ActiveX, etc. The script-based IMS application 40 is reliant on a web browser to render the application executable. In a particular embodiment, the script-based IMS application 40 can be provided in JavaScript (JS) in a browser page through XMLHttpRequest from a downloaded HTML/JS page. Asynchronous JavaScript and XML (AJAX) can be used to achieve the necessary script-based IMS functionality through the XMLHttpRequest. AJAX is a web development technique used to create interactive web applications or rich Internet applications. By using AJAX, web applications, including the script-based IMS application 40, can retrieve data from a server asynchronously in the background without interfering with the display and behavior of the existing page. Data is retrieved using the XMLHttpRequest object, where XMLHttpRequest is an application programming interface (API) that can be used inside a web browser scripting language, such as JavaScript, to send an HTTP request directly to a web server, such as the IG, and load the server response data directly back into the scripting language.

In a particular embodiment the script-based IMS application 40 comprises the functionality of a signal generator 42 configured to generate IPTV session signals that are destined to the IG to set-up and control an IPTV session. The signal generator 42 is preferably configured to conducts such IPTV session signaling using the HTTP signal protocol and in particular the HTTP-based HNI-IGI signal protocol defined for IPTV sessions.

The script-based IMS application 40 also comprises the functionality of an address provider 44 configured to provide address information to the embedded OITF system in the set top box. This address information is associated with requested media data available from a media server in the global network and has been received from the IG.

Fig. 10 is a schematic block diagram of an embodiment of a set top box 50 or other user equipment, terminal or device suitable for arrangement and operation in a home network. The set top box 50 comprises a unit or functionality for communicating with other devices, in particular the IG. This unit is represented as a communication interface 52 in the figure that operates as a general input and output (I/O) unit. In practice, the communication interface 52 could be a general input and output interface for a wired connection with external and remote devices or in the form of a receiver/transmitter or transceiver for wireless connection.

The set top box 50 also comprises a script-based IMS application 40, preferably as defined in Fig. 9. The script-based IMS application 40 is configured to be run by a web browser 54 implemented in the set top box 50. This web browser 54 represents the DAE as disclosed herein and is generally provided in the form of a software program locally installed and run in the set top box 50. Also hardware solutions are possible and within the scope of the embodiments. The web browser 54 is in particular configured to generate web pages displayable on a display screen of or connected, typically through the communication interface 52, with the set top box 50. The set top box 50 also comprises the embedded OITF system 56, which may be provided in hardware, software or a combination thereof. In a software implementation, the embedded OITF system 56 comprises the computer program elements effecting, when run on a computer or other processing unit, the functions of the embedded OITF system 56. This embedded OITF system 56 is configured to generate a media request based on the address information received from the script-based IMS application 40 and in particular the address provider 44 (see Fig. 9) of the script-based IMS application 40. The media request generated by the embedded OITF system 56 is for media data to be rendered within an IPTV session and is destined to a media server present in the global network.

The communication interface 52 is in particular configured to conduct HTTP-based communication with the IG and preferably HTTP-based HNI-IGI communication between the script-based IMS application 40 of the set top box 50 and the IG.

The communication interface 52 is preferably arranged for receiving, from the IG, the script, such as a HTTP/JS page, that provides the necessary functionalites for enabling IMS and IPTV sessions, i.e. the script-based IMS application 40. The received script data is forwarded to the web browser 54 or DAE application, where it is implemented and run in a browser environment resulting in the display, in the web browser 54, of information relating to the IPTV session to the user.

The script-based IMS application 40 is typically configured to receive a start-up request from the embedded OITF system 56 once it becomes activated. The script-based IMS application 40 then forwards the start-up request, such as the fixed FQDN pointing towards the IG, to initiate, at the IG, generation of a user selection page. Once the communication interface 52 receives this user selection page from the IG, it is presented to the script-based IMS application 40 for display by means of the web browser 54 on the display screen of or connected to the set top box 50. The user then activates a user input in wired connection or wirelessly connected to the communication interface 52 to indicate an intended user. This user input activation triggers the script-based IMS application 40 to generate a user selection command comprising the user identifier of the selected user. This user selection command is transmitted to the IG by the communication interface 52.

The script-based IMS application 40 further preferably receives a service provider selection page from the communication interface 52 and originating from the IG. The service provider selection page comprises respective provider identifiers of the service providers present in the global network. These provider identifiers are associated with the respective service providers but are designed by the IG to instead point towards the IG. The service provider selection page is displayed to the user in similar way as the user selection page. Activation of a connected user input triggers the generation by the script-based IMS application 40 of a service provider command destined to the IG and comprising the provider identifier of the selected service provider.

The script-based IMS application 40 also preferably receives a service selection message comprising address information of the IPTV services available at the selected service provider. The service selection message originates from the IG and is employed by the script-based IMS application 40 for generating a service description load command comprising the relevant address information of the IPTV services. This service description load command is forwarded to the embedded OITF system 56.

Once the IPTV session has been set-up the script-based IMS application 40 preferably generates and transmits a pending command comprising a pending HTTP request to the IG. The IG will then forward, based on the pending HTTP request, any incoming requests originating from the global network to the embedded OITF system 56.

The script-based IMS application 40 is preferably configured to generate and transmit, during an ongoing IPTV session and particularly a media on demand IPTV session, a port request to the embedded OITF system 56. The OITF system 56 responds with a response message comprising the requested port identifier(s) of at least one media port of the set top box 50. The script-based IMS application (40) then generates an invite message comprising the port identifier(s) and that is transmitted to the selected service provider by means of the communication interface 52 and the IG.

Once the script-based IMS application 40 has got access to the address information associated with the media data available from the media server it, during a media on demand IPTV session, generates and transmits a play request to the embedded OITF system 56. The play request comprises the address information and preferably an indication that no setup procedure should be performed by the embedded OITF session 56 since that setup procedure has already been conducted between the script-based IMS application (40) and the IPTV service provider.

In a scheduled content IPTV session or similar session involving multicasting or broadcasting of media data, the script-based IMS application 40 is configured to receive, from the IG, a session description message comprising the address information of the media data. In this case, the address information is in the form of address information of a multicast or broadcast media channel available from the media server. The address information is transmitted to the embedded OITF system 56 to trigger the embedded OITF system 56 to join the multicast or broadcast media channel.

In an alternative embodiment, though generally less preferred, the web browser application 54 and the embedded OITF system 56 can be implemented in different set top boxes, which then are wired or wirelessly connected to each other through the communication interface 52.

Additionally, the set top box 50 may comprise or be wired or wirelessly connected to a media processor having functionality for decoding and rendering received media content. The set top box or media processor then preferably comprises or is connected to a display screen and preferably a loudspeaker to display and play back the media.

Fig. 11 is a schematic overview of an embodiment of an IG 20. The IG 20 is typically implemented in the home network as illustrated in Fig. 1 to thereby communicate within the home network with the set top box(es) provided therein. The IG 20 can then be present in the home network as a stand-alone device. Alternatively, it is implemented together with the gateway of Fig. 1 forming the proxy functionality between the home network and the global network. Such a proxy functionality can be effected by a modem or other proxy unit. It is actually possible to have the IG 20 implemented in one of the set top boxes of the home network.

In fundamentally different implementation approach, the IG 20 is not implemented in the home network but rather in the global network, for instance, in connection with the access provider or IPTV provider or as a separate network-entity or server of the global network. Regardless of being implemented in the home network or the global network the IG 20 still provides functionality for translating between HTTP and SIP communications and is capable of communicating with the IMS and the IPTV application server. When implemented in the home network, the IG 20 terminates the HTTP signaling and sets up SIP signaling as if it is the originator. This hides the fact that the script-based IMS application is behind a network address translation (NAT) unit. An IG 20 implemented in the network operates as a proxy and keeps routing information to and from the script-based IMS application. The IMS can then deal with NAT issues.

The IG 20 comprises a unit or functionality for communicating with other devices in the home network, in particular the set top box, and preferably also, optionally through the gateway, with units or servers in the global network. This unit is represented as a communication interface 21 operating as a general I/O unit in the figure. In practice, the communication interface 21 could be a general input and output interface for a wired connection with external and remote devices or in the form of a receiver/transmitter or transceiver for wireless connection.

The IG comprises a register processor 22 configured to generate a register request comprising a user identifier of a selected user of the set top box. This register request is destined to the IMS and is transmitted thereto by means of the communication interface 21. A subscribe processor 23 is configured to generate a subscribe request destined to a selected IPTV service provider in the global network. This subscribe request enable the IG 20 to receive address information of IPTV service provider, preferably in the form of SD&S data. This address information is employed by an address converting processor 24 of the IG 20 to map the received address information to converted address information associated with the IPTV service provider but instead pointing towards the IG 20. A page building processor 25 uses the converted address information to generate a web page, i.e. service provider selection page that is transmitted by the communication interface to the set top box and the script-based IMS application run therein.

In a particular embodiment, the address converting processor 24 is configured to also map auxiliary address information associated with other service providers that has media services that potentially can be run and provided inside the IPTV session. The address converting processor 24 thereby generates converted auxiliary address information associated with such other service provider(s) but pointing towards the IG 20. The page building processor 25 then also uses this converted auxiliary address information when generating the web page.

An optional but preferred HTTP-SIP converting processor 26 is implemented in the IG 20 and configured to convert a HTTP-based message originating from the set top box, including a HNI-IGI message from the script-based IMS application, into a corresponding SIP-based message destined to the IMS or the IPTV service provider. Correspondingly, the HTTP-SIP converting processor 26 is configured to convert an incoming SIP-based message originating from the global network into a corresponding HTTP-based message destined to the set top box.

The page building processor 25 is preferably also configured to generate a web page or user selection page comprising user identifiers of multiple users potentially available for the set top box in response to a user selection request originating from the set top box. In such a case, the IG 20 preferably comprises a memory (not illustrated) housing user identifiers of previously registered users of the home network. The page building processor 25 then simply retrieves these stored user identifiers from the memory upon reception of the user selection request. In an alternative approach, the IG retrieves the user identifiers from another source, such as the IMS. The communication interface 21 then forwards the user selection request to the IMS together with an identifier of the home network or the IG 20 to allow the IMS to identify previously registers users of that home network or the IG 20. The user identifiers are then returned to the communication interface 21 and forwarded to the page building processor 25.

The communication interface 21 is preferably configured to receive a pending command comprising a pending HTTP request from the set top box. This pending command triggers the communication interface 21 to transmit any incoming requests originating from the global network, such as IMS or IPTV application server, to the set top box.

Any functionalities of the set top box or IG as illustrated in Figs. 10 and 11 and which are implemented in software and are then provided as a computer program product directly loadable into the internal memory of a computer or processing unit of the set top box or IG and comprising software code portions for performing the necessary functions. A computer should be interpreted broadly to include any device, server, gateway or terminal, whether stationary or portable, comprising the relevant functionalities as described herein.

The embodiments described above are to be understood as a few illustrative examples of the present invention.

## Claims

1. A set top box (50) comprising:
a communication interface (52) configured to enable communication with an IP Multimedia Subsystem, IMS, gateway (20);
a web browser (54) configured to generate a web page displayable on a display screen (60) of or connected to said set top box (50);
an embedded Open IPTV Terminal Function, OITF, system (56) connected to said communication interface (52); and
a script-based IMS application (40) configured to be run by said web browser (54) and comprising:
a signal generator (42) configured to generate IP television, IPTV, session signals destined to said IMS gateway (20) to set-up and control an IPTV session; and
an address provider (44) configured to provide, to said OITF system (56), address information associated with media data available from a media server (70) in a global network (2) connected to said home network (1) and received from said IMS gateway (20), wherein said OITF system (56) is configured to generate, based on said address information from said script-based IMS application (40), a media request for said media data within said IPTV session and destined to said media server (70)
wherein said script-based IMS application (40) is configured to receive, from said IMS gateway (20), a service provider selection page comprising, for each available service provider (80) present in said global network (2), a provider identifier associated with the service provider (80) but pointing towards said IMS gateway (20) and transmit, to said IMS gateway (20), a service provider command, generated based on a user input, pointing back to the IMS gateway (20) and comprising a provider identifier of a selected service provider (80), wherein the user input is configured to trigger the script-based IMS application to generate said service provider command comprising the provider identifier of the selected service provider.

2. The set top box according to claim 1, wherein said communication interface (52) is configured to conduct HTTP-based communication with said IMS gateway (20).

3. The set top box according to claim 1 or 2, wherein said script-based IMS application (40) is configured to receive a start up request from said embedded OITF system (56) and forward said start up request to said IMS gateway (20) by means of said communication interface (52) to initiate generation of a user selection page.

4. The set top box according to claim 3, wherein said script-based IMS application (40) is configured to receive said user selection page comprising at least one user identifier of available users from said IMS gateway (20), present said user selection page by means of said web browser (54) on said display screen (60) and transmit, to said IMS gateway (20), a user selection command comprising a user identifier of a selected user and generated based on a user input, wherein activation of the user input generates a user selection command comprising the user identifier associated with the selected user.

5. The set top box according to any of the claims 1 to 4, wherein said script-based IMS application (40) is configured to receive, from said IMS gateway (20), a service selection message comprising address information of IPTV services available at a selected service provider (80) present in said global network (2) and transmit, to said embedded OITF system (56), a service description load command comprising said address information of said IPTV services.

6. The set top box according to any of the claims 1 to 5, wherein said script-based IMS application (40) is configured to transmit a pending command comprising a pending HTTP request to said IMS gateway (20) to enable said IMS gateway (20) to forward an incoming request originating from said global network (2) to said embedded OITF system (56).

7. The set top box according to any of the claims 1 to 6, wherein said script-based IMS application (40) is configured to transmit a port request to said embedded OITF system (56), receive, from said embedded OITF system (56), a response message comprising a port identifier of at least one media port of said set top box (50) and transmit, to a selected service provider (80) in said global network (2) and by means of said IMS gateway (20), an invite message comprising said port identifier.

8. The set top box according to any of the claims 1 to 7, wherein said script-based IMS application (40) is configured to transmit, to said embedded OITF system (56), a play request comprising said address information associated with said media data available from said media server (70) and an indication that no setup procedure should be performed by said embedded OITF system (56).

9. The set top box according to any of the claims 1 to 6, wherein said script-based IMS application (40) is configured to receive, from said IMS gateway (20), a session description message comprising said address information in the form of address information of a multicast or broadcast media channel available from said media server (70) and transmit said address information to said embedded OITF system (56) to trigger said embedded OITF system (56) to join said multicast or broadcast media channel.

10. A method of setting up an IP television, IPTV, session comprising;
running a script-based IP Multimedia Subsystem, IMS, application (40) in a web browser (54) implemented in a set top box (50);
said script-based IMS application (40) generating IPTV session set-up signals based on a user input;
communicating said IPTV session set-up signals to an IMS gateway (20) connected to said set top box (50) in a home network (1);
said script-based IMS application (40) receiving, from said IMS gateway (20), address information associated with media data available from a media server (70) in a global network (2) connected to said home network (1); and
said script-based IMS application (40) forwarding said address information to an embedded Open IPTV Terminal Function, OITF, system (56) of said set top box (50) to trigger generation, within an IPTV session, of a media request for said media data and destined to said media server (70)
said script-based IMS application (40) receiving, from said IMS gateway (20), a service provider selection page comprising, for each available service provider (80) present in said global network (2), a provider identifier associated with the service provider (80) but pointing towards said IMS gateway (20); and
said script-based IMS application (40) transmitting, to said IMS gateway (20), a service provider command, generated based on a user input, comprising a provider identifier of a selected service provider (80), wherein the user input is configured to trigger the script-based IMS application to generate the service provider command pointing back to the IMS gateway (20) and comprising the provider identifier of the selected service provider.

11. The method according to claim 10, further comprising:
said script-based IMS application (40) receiving a start up request from said embedded OITF system (56); and
said script-based IMS application (40) forwarding said start up request to said IMS gateway (20) to trigger generation of a user selection page.

12. The method according to claim 11, further comprising:
said script-based IMS application (40) receiving said user selection page comprising at least one user identifier of available users from said IMS gateway (20);
said script-based IMS application (40) presenting said user selection page by means of said web browser (54) on a display screen (60) of or connected to said set top box (50); and
said script-based IMS application (40) transmitting, to said IMS gateway (20), a user selection command comprising an user identifier of a selected user and generated based on activation of user input of or connected to said set top box (50).

13. The method according to any of the claims 10 to 12, further comprising:
said script-based IMS application (40) receiving, from said IMS gateway (20), a service selection message comprising address information of IPTV services available at a selected service provider (80) present in said global network (2); and
said script-based IMS application (40) transmitting, to said embedded OITF system (56), a service description load command comprising said address information of said IPTV session.

14. The method according to any of the claims 10 to 13, further comprising said script-based IMS application (40) transmitting a pending command comprising a pending HTTP request to said IMS gateway (20) to enable said IMS gateway (20) to forward an incoming request originating from said global network (2) to said embedded OITF system (56).

15. The method according to any of the claims 10 to 14, further comprising:
said script-based IMS application (40) transmitting a port request to said OITF embedded system (56);
said script-based IMS application (40) receiving, from said embedded OITF system (56), a response message comprising a port identifier of at least one media port of said set top box (50); and
said script-based IMS application (40) transmitting, to a selected service provider (80) in said global network (2) and by means of said IMS gateway (20), an invite message comprising said port identifier.

16. The method according to any of the claims 10 to 15, wherein forwarding said address information comprises said script-based IMS application (40) transmitting, to said embedded OITF system (56), a play request comprising said address information associated with said media data available at said media server (70) and an indication that no setup procedure should be performed by said embedded OITF system (56).

17. The method according to any of the claims 10 to 14, further comprising said script-based IMS application (40) receiving, from said IMS gateway (20), a session description message comprising said address information in the form of address information of a multicast or broadcast media channel available from said media server (70), wherein forwarding said address information comprises said script-based IMS application (40) transmitting said address information to said embedded OITF system (56) to trigger said embedded OITF system (56) to join said multicast or broadcast media channel.

## Patentansprüche

1. Set-Top-Box (50), umfassend:
eine Kommunikationsschnittstelle (52), die so konfiguriert ist, dass sie Kommunikation mit einem IP-Multimedia-Subsystem, IMS,-Gateway (20) ermöglicht;
einen Webbrowser (54), der so konfiguriert ist, dass er eine Webseite erzeugt, die auf einem Anzeigebildschirm (60) der oder verbunden mit der Set-Top-Box (50) angezeigt werden kann;
ein System (56) mit eingebetteter Open-IPTV-Endgerätefunktion, OITF, das mit der Kommunikationsschnittstelle (52) verbunden ist; und
eine skriptbasierte IMS-Anwendung (40), die so konfiguriert ist, dass sie durch den Webbrowser (54) ausgeführt wird und umfasst:
einen Signalgenerator (42), der so konfiguriert ist, dass er IP-Televisions, IPTV,-Sitzungssignale erzeugt, die für das IMS-Gateway (20) bestimmt sind, um eine IPTV-Sitzung aufzubauen und zu steuern; und
einen Adressenanbieter (44), der so konfiguriert ist, dass er Adressinformationen, die mit Mediendaten assoziiert sind, die von einem Medienserver (70) in einem globalen Netz (2) verfügbar sind, das mit dem Heimatnetz (1) verbunden ist, und vom IMS-Gateway (20) empfangen werden, für das OITF-System (56) bereitstellt, wobei das OITF-System (56) so konfiguriert ist, dass es basierend auf den Adressinformationen von der skriptbasierten IMS-Anwendung (40) eine Medienanforderung für die Mediendaten innerhalb der IPTV-Sitzung und bestimmt für den Medienserver (70) erzeugt,
wobei die skriptbasierte IMS-Anwendung (40) so konfiguriert ist, dass sie vom IMS-Gateway (20) eine Dienstanbieterauswahlseite empfängt, die für jeden verfügbaren Dienstanbieter (80), der im globalen Netz (2) vorhanden ist, eine Anbieterkennung umfasst, die mit dem Dienstanbieter (80) assoziiert ist, aber auf das IMS-Gateway (20) zeigt, und einen Dienstanbieterbefehl an das IMS-Gateway (20) sendet, der basierend auf einer Benutzereingabe erzeugt wird, die auf das IMS-Gateway (20) zurückzeigt, und eine Dienstkennung eines ausgewählten Dienstanbieters (80) umfasst, wobei die Benutzereingabe so konfiguriert ist, dass sie die skriptbasierte IMS-Anwendung auslöst, um den Dienstanbieterbefehl zu erzeugen, der die Anbieterkennung des ausgewählten Dienstanbieters umfasst.

2. Set-Top-Box nach Anspruch 1, wobei die Kommunikationsschnittstelle (52) so konfiguriert ist, dass sie HTTP-basierte Kommunikation mit dem IMS-Gateway (20) durchführt.

3. Set-Top-Box nach Anspruch 1 oder 2, wobei die skriptbasierte IMS-Anwendung (40) so konfiguriert ist, dass sie eine Startanforderung vom System (56) mit eingebetteter OITF empfängt und die Startanforderung durch die Kommunikationsschnittstelle (52) an das IMS-Gateway (20) weiterleitet, um die Erzeugung einer Benutzerauswahlseite auszulösen.

4. Set-Top-Box nach Anspruch 3, wobei die skriptbasierte IMS-Anwendung (40) so konfiguriert ist, dass sie die Benutzerauswahlseite, die mindestens eine Benutzerkennung von verfügbaren Benutzern umfasst, vom IMS-Gateway (20) empfängt, die Benutzerauswahlseite durch den Webbrowser (54) auf einem Anzeigebildschirm (60) darstellt und einen Benutzerauswahlbefehl, der eine Benutzerkennung eines ausgewählten Benutzers umfasst und basierend auf einer Benutzereingabe erzeugt wird, an das IMS-Gateway (20) sendet, wobei die Aktivierung der Benutzereingabe einen Benutzerauswahlbefehl erzeugt, der die mit dem ausgewählten Benutzer assoziierte Benutzerkennung umfasst.

5. Set-Top-Box nach einem der Ansprüche 1 bis 4, wobei die skriptbasierte IMS-Anwendung (40) so konfiguriert ist, dass sie vom IMS-Gateway (20) eine Dienstauswahlnachricht empfängt, welche Adressinformationen von IPTV-Diensten umfasst, die bei einem ausgewählten Dienstanbieter (80) verfügbar sind, der im globalen Netz (2) vorhanden ist, und einen Dienstbeschreibungslastbefehl, der die Adressinformationen der IPTV-Dienste umfasst, an das System (56) mit eingebetteter OITF sendet.

6. Set-Top-Box nach einem der Ansprüche 1 bis 5, wobei die skriptbasierte IMS-Anwendung (40) so konfiguriert ist, dass sie einen anhängigen Befehl, der eine anhängige HTTP-Anforderung umfasst, an das IMS-Gateway (20) sendet, um das IMS-Gateway (20) zu befähigen, eine eingehende Anforderung, die vom globalen Netz (2) stammt, an das System (56) mit eingebetteter OITF zu senden.

7. Set-Top-Box nach einem der Ansprüche 1 bis 6, wobei die skriptbasierte IMS-Anwendung (40) so konfiguriert ist, dass sie eine Port-Anforderung an das System (56) mit eingebetteter OITF sendet, vom System (56) mit eingebetteter OITF eine Antwortnachricht empfängt, die eine Port-Kennung mindestens eines Medien-Ports der Set-Top-Box (50) umfasst, und eine Einladungsnachricht, welche die Port-Kennung umfasst, durch das IMS-Gateway (20) an einen ausgewählten Dienstanbieter (80) im globalen Netz (2) sendet.

8. Set-Top-Box nach einem der Ansprüche 1 bis 7, wobei die skriptbasierte IMS-Anwendung (40) so konfiguriert ist, dass sie eine Abspielanforderung, welche die Adressinformationen umfasst, die mit den Mediendaten assoziiert sind, die vom Medienserver (70) verfügbar sind, und eine Anzeige, dass keine Aufbauprozedur durch das System (56) mit eingebetteter OITF durchgeführt werden sollte, an das System (56) mit eingebetteter OITF sendet.

9. Set-Top-Box nach einem der Ansprüche 1 bis 6, wobei die skriptbasierte IMS-Anwendung (40) so konfiguriert ist, dass sie vom IMS-Gateway (20) eine Sitzungsbeschreibungsnachricht empfängt, welche die Adressinformationen in der Form von Adressinformationen eines Multicast- oder Broadcast-Medienkanals umfasst, der vom Medienserver (70) verfügbar ist, und die Adressinformationen an das System (56) mit eingebetteter OITF sendet, um das System (56) mit eingebetteter OITF zum Anschluss an den Multicast- oder Broadcast-Medienkanal auszulösen.

10. Verfahren zum Aufbau einer IP-Televisions, IPTV-Sitzung, umfassend:
Ausführen einer skriptbasierten IP-Multimedia-Subsystem, IMS,-Anwendung (40) in einem Webbrowser (54), der in einer Set-Top-Box (50) implementiert wird;
wobei die skriptbasierte IMS-Anwendung (40) IPTV-Sitzungsaufbausignale basierend auf einer Benutzereingabe erzeugt;
Kommunizieren der IPTV-Sitzungsaufbausignale an ein IMS-Gateway (20), das mit der Set-Top-Box (50) in einem Heimatnetz (1) verbunden ist;
wobei die skriptbasierte IMS-Anwendung (40) vom IMS-Gateway (20) Adressinformationen empfängt, die mit Mediendaten assoziiert sind, die von einem Medienserver (70) in einem globalen Netz (2) verfügbar sind, das mit dem Heimatnetz (1) verbunden ist; und
die skriptbasierte IMS-Anwendung (40) die Adressinformationen an ein System (56) mit eingebetteter Open-IPTV-Endgerätefunktion, OITF, der Set-Top-Box (50) weiterleitet, um innerhalb einer IPTV-Sitzung die Erzeugung einer Medienanforderung für die Mediendaten und bestimmt für den Medienserver (70) auszulösen,
die skriptbasierte IMS-Anwendung (40) vom IMS-Gateway (20) eine Dienstanbieterauswahlseite empfängt, die für jeden verfügbaren Dienstanbieter (80), der im globalen Netz (2) vorhanden ist, eine Anbieterkennung umfasst, die mit dem Dienstanbieter (80) assoziiert ist, aber zum IMS-Gateway (20) zeigt; und
die skriptbasierte IMS-Anwendung (40) einen Dienstanbieterbefehl, der basierend auf einer Benutzereingabe erzeugt wird und eine Anbieterkennung eines ausgewählten Dienstanbieters (80) umfasst, an das IMS-Gateway (20) sendet, wobei die Benutzereigabe so konfiguriert ist, dass sie die skriptbasierte IMS-Anwendung auslöst, um den Dienstanbieterbefehl zu erzeugen, der zum IMS-Gateway (20) zurückzeigt und die Anbieterkennung des ausgewählten Dienstanbieters umfasst.

11. Verfahren nach Anspruch 10, ferner umfassend, dass
die skriptbasierte IMS-Anwendung (40) eine Startanforderung vom System (56) mit eingebetteter OITF empfängt;
die skriptbasierte IMS-Anwendung (40) die Startanforderung an das IMS-Gateway (20) weiterleitet, um die Erzeugung einer Benutzerauswahlseite auszulösen.

12. Verfahren nach Anspruch 11, ferner umfassend, dass
die skriptbasierte IMS-Anwendung (40) die Benutzerauswahlseite, die mindestens eine Benutzerkennung von verfügbaren Benutzern umfasst, vom IMS-Gateway (20) empfängt;
die skriptbasierte IMS-Anwendung (40) die Benutzerauswahlseite durch den Webbrowser (54) auf einem Anzeigebildschirm (60) der oder verbunden mit der Set-Top-Box (50) darstellt; und
die skriptbasierte IMS-Anwendung (40) einen Benutzerauswahlbefehl, der eine Benutzerkennung eines ausgewählten Benutzers umfasst und basierend auf der Aktivierung einer Benutzereingabe der oder verbunden mit der Set-Top-Box (50) erzeugt wird, an das IMS-Gateway (20) sendet.

13. Verfahren nach einem der Ansprüche 10 bis 12, ferner umfassend, dass
die skriptbasierte IMS-Anwendung (40) eine Dienstauswahlnachricht, welche Adressinformationen von IPTV-Diensten umfasst, die bei einem ausgewählten Dienstanbieter (80) verfügbar sind, der im globalen Netz (2) vorhanden ist, vom IMS-Gateway (20) empfängt; und
die skriptbasierte IMS-Anwendung (40) einen Dienstbeschreibungslastbefehl, der die Adressinformationen der IPTV-Sitzung umfasst, an das System (56) mit eingebetteter OITF sendet.

14. Verfahren nach einem der Ansprüche 10 bis 13, ferner umfassend, dass die skriptbasierte IMS-Anwendung (40) einen anhängigen Befehl, der eine anhängige HTTP-Anforderung umfasst, an das IMS-Gateway (20) sendet, um das IMS-Gateway (20) zu befähigen, eine eingehende Anforderung, die vom globalen Netz (2) stammt, an das System (56) mit eingebetteter OITF zu senden.

15. Verfahren nach einem der Ansprüche 10 bis 14, ferner umfassend, dass
die skriptbasierte IMS-Anwendung (40) eine Port-Anforderung an das System (56) mit eingebetteter OITF sendet;
die skriptbasierte IMS-Anwendung (40) eine Antwortnachricht, welche eine Port-Kennung mindestens eines Medien-Ports der Set-Top-Box (50) umfasst, vom System (56) mit eingebetteter OITF empfängt; und
die skriptbasierte IMS-Anwendung (40) eine Einladungsnachricht, welche die Port-Kennung umfasst, an einen ausgewählten Dienstanbieter (80) im globalen Netz (2) und durch das IMS-Gateway (20) sendet.

16. Verfahren nach einem der Ansprüche 10 bis 15, wobei das Weiterleiten der Adressinformationen umfasst, dass die skriptbasierte IMS-Anwendung (40) eine Abspielanforderung, welche die Adressinformationen umfasst, die mit den Mediendaten assoziiert sind, die am Medienserver (70) verfügbar sind, und eine Anzeige, dass keine Aufbauprozedur durch das System (56) mit eingebetteter OITF durchgeführt werden sollte, an das System (56) mit eingebetteter OITF sendet.

17. Verfahren nach einem der Ansprüche 10 bis 14, ferner umfassend, dass die skriptbasierte IMS-Anwendung (40) eine Sitzungsbeschreibungsnachricht vom IMS-Gateway (20) empfängt, welche die Adressinformationen in der Form von Adressinformationen eines Multicast- oder Broadcast-Medienkanals umfasst, der vom Medienserver (70) verfügbar ist, wobei das Weiterleiten der Adressinformationen umfasst, dass die skriptbasierte IMS-Anwendung (40) die Adressinformationen an das System (56) mit eingebetteter OITF sendet, um das System (56) mit eingebetteter OITF zum Anschluss an den Multicast- oder Broadcast-Medienkanal auszulösen.

## Revendications

1. Terminal décodeur (50) comprenant :
une interface de communication (52) configurée pour activer une communication avec une passerelle de sous-système multimédia IP, IMS (20) ;
un navigateur web (54) configuré pour générer une page web affichable sur un écran (60) de ou connecté audit terminal décodeur (50) ;
un système de fonction de terminal IPTV ouvert incorporé (56) connecté à ladite interface de communication (52) ; et
une application IMS basée sur script (40) configurée pour être exécutée par ledit navigateur web (54) et comprenant :
un générateur de signaux (42) configuré pour générer des signaux de session de télévision IP, IPTVQ, destinés à ladite passerelle IM (20) pour établir et commander une session IPTV ; et
un fournisseur d'adresse (44) configuré pour fournir audit système OITF (56), une information d'adresse associée aux données média disponibles à partir d'un serveur média (70) dans un réseau global (2) connecté audit réseau de rattachement (1) et reçue depuis ladite passerelle IMS (20), dans lequel ledit système OITF (56) est configuré pour générer, sur la base de ladite information d'adresse d'après ladite application IMS basée sur script (40), une demande média desdites données média à l'intérieur de ladite session IPYV et destinée audit serveur média (70),
dans lequel ladite application IMS basée sur script (40) est configurée pour recevoir, depuis ladite passerelle IMS (20), une page de sélection de fournisseur de service comprenant, pour chaque fournisseur de service disponible (80) présente dans ledit réseau global (2), un identifiant de fournisseur associé au fournisseur de service (80) mais pointant vers ladite passerelle IMS (20) et transmettre à ladite passerelle IMS (20) une commande de fournisseur de service repointant vers la passerelle IMS (20) et comprenant un identifiant de fournisseur d'un fournisseur de service sélectionné (80), dans lequel l'entrée d'utilisateur est configurée pour déclencher l'application IMS basée sur script pour générer ladite commande de fournisseur de service comprenant l'identifiant de fournisseur du fournisseur de service sélectionné.

2. Terminal décodeur selon la revendication 1, dans lequel ladite interface de communication (52) est configurée pour effectuer une communication basée sur http avec ladite passerelle IMS (20).

3. Terminal décodeur selon la revendication 1 ou 2, dans lequel ladite application IMS basée sur script (40) est configurée pour recevoir une demande de démarrage provenant dudit système OITF incorporé (56) et acheminer ladite demande de démarrage vers ladite passerelle IMS (20) au moyen de ladite interface de communication (52) pour amorcer la génération d'un page de sélection d'utilisateur.

4. Terminal décodeur selon la revendication 3, dans lequel ladite application IMS basée sur script (40) est configurée pour recevoir ladite page de sélection d'utilisateur comprenant au moins un identifiant d'utilisateur d'utilisateurs disponibles depuis ladite passerelle IMS (20), présenter ladite page de sélection d'utilisateur au moyen dudit navigateur web (54) sur ledit écran (60) et transmettre à ladite passerelle IMS (20) une commande de sélection d'utilisateur comprenant un identifiant d'utilisateur d'un utilisateur sélectionné et généré sur la base d'une entrée d'utilisateur, dans lequel l'activation de l'entrée d'utilisateur génère une commande de sélection d'utilisateur comprenant l'identifiant d'utilisateur associé à l'utilisateur sélectionné.

5. Terminal décodeur selon une quelconque des revendications 1 à 4, dans lequel ladite application IMS basée sur script (40) est configurée pour recevoir depuis ladite passerelle IMS (20) un message de sélection de service comprenant une information d'adresse des services IPTV disponibles au niveau d'un fournisseur de service sélectionné (80) présent dans ledit réseau global (2) et transmettre audit système OITF incorporé (56), une commande de charge de description de service comprenant ladite information d'adresse desdites services IPTV.

6. Terminal décodeur selon une quelconque des revendications 1 à 5, dans lequel ladite application IMS basée sur script (40) est configurée pour transmettre une commande en attente comprenant une demande http en attente vers ladite passerelle IMS (20) pour permettre à ladite passerelle IMS (20) d'acheminer une demande entrante émanant dudit réseau global (2) vers ledit système OITF amélioré (56).

7. Terminal décodeur selon une quelconque des revendications 1 à 6, dans lequel ladite application IMS basée sur script (40) est configurée pour transmettre une demande de port audit système OITF incorporé (56), recevoir depuis ledit système OITF incorporé (56), un message de réponse comprenant un identifiant de port d'au moins un port média dudit terminal décodeur (50) et transmettre à un fournisseur de service sélectionné (80) dans ledit réseau global (2) et au moyen de ladite passerelle IMS (20), un message d'invitation comprenant ledit identifiant de port.

8. Terminal décodeur selon une quelconque des revendications 1 à 7, dans lequel ladite application IMS basée sur script (40) est configurée pour transmettre ledit système OITF (56) une demande de lecture comprenant ladite information d'adresse associée auxdites données média disponibles depuis ledit serveur média (70) et une indication qu'aucune procédure d'établissement ne devrait être effectuée par ledit système OITF incorporé (56).

9. Terminal décodeur selon une quelconque des revendications 1 à 6, dans lequel ladite application IMS basée sur script (40) est configurée pour recevoir depuis ladite passerelle IMS (20) un message de description de session comprenant ladite information d'adresse sous la forme d'une information d'adresse d'un canal de diffusion ou multidiffusion média disponible depuis ledit serveur média (70) et transmettre ladite information d'adresse audit système OITF incorporé (56) pour déclencher ledit système OITF incorporé (56) afin de joindre ledit canal de diffusion ou multidiffusion média.

10. Procédé d'établissement de session de télévision IP, IPTV, comprenant de :
exécuter une application de sous-système multimédia IP, IMS, basée sur script (40) dans un navigateur web (54) implémenté dans un terminal décodeur (50) ;
générer par ladite application IMS basée sur script (40) des signaux d'établissement de session IPTV sur la base d'une entrée d'utilisateur ;
communiquer lesdits signaux d'établissement de session IPTV à une passerelle IMS (20) connectée audit terminal décodeur (50) dans un réseau de rattachement (1) ;
recevoir par ladite application IMS basée sur script (40), depuis ladite passerelle IMS (20), une information d'adresse associée aux données média disponibles depuis un serveur média (70) dans un réseau global (2) connecté audit réseau de rattachement (1) ; et
acheminer par ladite application IMS basée sur script (40) ladite information d'adresse vers un système de fonction de terminal IPTV ouvert incorporé OITF (56) dudit terminal décodeur (50) pour déclencher une génération, à l'intérieur d'une session IPTV, d'une demande média pour lesdites données média et destinées audit serveur média (70),
recevoir par ladite application IMS basée sur script (40) depuis ladite passerelle IMS (20) une page de sélection de fournisseur de service comprenant, pour chaque fournisseur de service disponible (80) présent dans ledit réseau global (2), un identifiant de fournisseur associé au fournisseur de service (80) mais pointant vers ladite passerelle IMS (20) ; et
transmettre par ladite application IMS basée sur script (40) à ladite passerelle IMS (20) une commande de fournisseur de service générée sur la base d'une entrée d'utilisateur comprenant un identifiant de fournisseur d'un fournisseur de service sélectionné (80), dans lequel l'entrée d'utilisateur est configurée pour déclencher l'application IMS basée sur script pour générer la commande de fournisseur de service repointant vers la passerelle IMS (20) et comprenant l'identifiant de fournisseur du fournisseur de service sélectionné.

11. Procédé selon la revendication 10, comprenant en outre de :
recevoir par ladite application IMS basée sur script (40) une demande de démarrage provenant dudit système OITF incorporé (56) ; et
acheminer par ladite application IMS basée sur script (40) ladite demande de démarrage vers ladite passerelle IMS (20) pour déclencher la génération d'une page de sélection d'utilisateur.

12. Procédé selon la revendication 11, comprenant en outre de :
recevoir par ladite application IMS basée sur script (40) ladite page de sélection d'utilisateur comprenant au moins un identifiant d'utilisateur des utilisateurs disponibles depuis ladite passerelle IMS (20) ;
présenter par ladite application IMS basée sur script (40) ladite page de sélection d'utilisateur au moyen dudit navigateur web (54) sur un écran (60) ou connecté audit terminal décodeur (50) ; et
transmettre par ladite application IMS basée sur script (40) à ladite passerelle IMS (20), une commande de sélection d'utilisateur comprenant un identifiant d'utilisateur d'un utilisateur sélectionné et généré sur la base de l'activation d'entrée d'utilisation du ou connectée au terminal décodeur (50).

13. Procédé selon une quelconque des revendications 10 à 12, comprenant en outre de :
recevoir par ladite application IMS basée sur script (40) depuis ladite passerelle IMS (20), un message de sélection de service comprenant une information d'adresse de services IPTV disponibles au niveau d'un fournisseur de service sélectionné (80) présent dans ledit réseau global (2) ; et
transmettre par ladite application IMS basée sur script (40) audit système OITF incorporé (56) une commande de charge de description de service comprenant ladite information d'adresse de ladite session IPTV.

14. Procédé selon une quelconque des revendications 10 à 13, comprenant en outre de transmettre par ladite application IMS basée sur script (40) une commande en attente comprenant une demande http en attente à ladite passerelle IMS (20) pour permettre à ladite passerelle IMS (20) d'acheminer une demande entrante émanant dudit réseau global (2) audit système OITF incorporé (56).

15. Procédé selon une quelconque des revendications 10 à 14, comprenant en outre de :
transmettre par ladite application IMS basée sur script (40) une demande de port audit système incorporé OITF (56) ;
recevoir par ladite application IMS basée sur script (40) depuis ledit système OITF incorporé (56) un message de réponse comprenant un identifiant de port d'au moins un port média dudit terminal décodeur (50) ; et
transmettre par ladite application IMS basée sur script (40) à un fournisseur de service sélectionné (80) dans ledit réseau global (2) et au moyen de ladite passerelle IMS (20) un message d'invitation comprenant ledit identifiant de port.

16. Procédé selon une quelconque des revendications 10 à 15, dans lequel acheminer ladite information d'adresse comprend de transmettre par ladite application IMS basée sur script (40), audit système OITF incorporé (56) une demande de lecture comprenant ladite information d'adresse associée auxdites données média disponibles au niveau dudit serveur média (70) et une indication qu'aucune procédure d'établissement ne devrait être effectuée par ledit système OITF incorporé (56).

17. Procédé selon une quelconque des revendications 10 à 14, comprenant en poutre de recevoir par ladite application IMS basée sur script (40), depuis ladite passerelle IMS (20), un message de description de session comprenant ladite information d'adresse sous la forme d'une information d'adresse d'un canal de diffusion ou multidiffusion média disponible depuis ledit serveur média (70), dans lequel acheminer ladite information d'adresse comprend de transmettre par ladite application IMS basée sur script (40) ladite information d'adresse audit système OITF incorporé (56) pour déclencher ledit système OITF incorporé (56) afin de joindre ledit canal de diffusion ou multidiffusion média.
